# EUROPEAN PATENT APPLICATION

(11) **EP 4 318 236 A1**
(43) Date of publication of application: **07.02.2024**
(21) Application number: 22806232.9
(22) Date of filing: 11.02.2022
(51) Int. Cl.: G06F 9/48

(54) **MANAGEMENT METHOD AND SYSTEM FOR COMPUTING NODE**

(30) Priority: 14.05.2021 CN 202110528216
(71) Applicant: Huawei Technologies Co., Ltd., Shenzhen, Guangdong 518129 (CN)
(72) Inventor: WANG, Enbo, Shenzhen, Guangdong 518129 (CN); LIANG, Wenliang, Shenzhen, Guangdong 518129 (CN); SHEN, Haihua, Shenzhen, Guangdong 518129 (CN)
(74) Representative: Pfenning, Meinig & Partner mbB
(86) International application number: PCT/CN2022/076076
(87) International publication number: WO 2022/237255

(57) **Abstract**

This application provides a computing node management method and system. In technical solutions provided in this application, a first device is mapped to a worker node on an edge node, a task unit descriptor is determined based on a scheduling unit descriptor and a virtual node context corresponding to the worker node to which the first device is mapped, first information including the task unit descriptor is sent to the first device, and finally the first device creates a task unit instance based on the task unit descriptor in the first information, so that a computing task can run on a terminal device or a network node that does not support a scheduling unit descriptor type, so as to deploy the computing task on the terminal device or the network node.

## Description

This application claims priority to Chinese Patent Application No. 202110528216.5, filed with the China National Intellectual Property Administration on May 14, 2021 and entitled "COMPUTING NODE MANAGEMENT METHOD AND SYSTEM", which is incorporated herein by reference in its entirety.

### TECHNICAL FIELD

This application relates to the field of communication technologies, and in particular, to a computing node management method and system.

### BACKGROUND

With continuous enrichment and development of mobile applications and Internet of Things technologies, emergence of a computing offloading technology provides an effective solution for a resource-constrained terminal device. The computing offloading technology is to completely or partially offload a computing task running on a terminal device whose resources are constrained to an edge node with relatively rich resources.

Currently, KubeEdge, as an open platform that supports edge computing, is built based on Kubernetes and is configured to extend a containerized application orchestration function to an edge node. Therefore, a computing task can be scheduled to the edge node. However, KubeEdge does not support scheduling of the computing task to a terminal device. Therefore, with enhancement of a computing capability of the terminal device, how to use the terminal device as a computing resource to schedule a computing task to the terminal device becomes an urgent technical problem to be resolved.

### SUMMARY

This application provides a computing node management method and system, so that a computing task can be scheduled to a terminal device or a network node. Further, when the terminal device is handed over from one edge node to another edge node, unnecessary re-scheduling can be avoided.

According to a first aspect, this application provides a computing node management method, applied to a first device. The method includes: obtaining first information, where the first information indicates the first device to create a task unit instance, the first information includes a task unit descriptor, the task unit descriptor includes description information of a task unit of the first device, and the description information includes a task unit type, a task unit name, and a task unit specification; and creating the task unit instance based on the task unit descriptor.

According to the computing node management method provided in this application, the first device may be a terminal device or a network node. In this technical solution, the first information that indicates the first device to create a task unit instance includes a task unit descriptor, and the task unit descriptor may be identified by the first device and may be considered as description information of a computing task that is run by the first device in a manner of a task unit to run the computing task, where the task unit is a minimum functional unit for running the computing task on the first device. The task unit descriptor is similar to a scheduling unit descriptor of a worker node in an edge computing environment. The scheduling unit descriptor is description information of a computing task running on the worker node in a manner of a scheduling unit. The worker node is a computing node that runs the computing task. After obtaining the task unit descriptor, the first device may create a task unit instance based on the task unit descriptor. Therefore, a function of allocating a resource to a computing task and running the computing task on the terminal device or the network node is implemented.

With reference to the first aspect, in a possible implementation, before the obtaining first information, the method further includes:
sending a resource registration request message, where the resource registration request message is used to request to map the first device to a worker node, the resource registration request message includes a resource identifier and task unit type information of the first device, and the task unit type information indicates a task unit type that can be used by the first device.

With reference to the first aspect, in a possible implementation, the method further includes: obtaining a resource registration response message from a second device, where the resource registration response message includes result information indicating that the first device is mapped to the worker node, and the result information includes a flag indicating whether resource registration is successful, for example, success or failure, and an optional failure reason.

According to a second aspect, this application provides a computing node management method, applied to a second device. The method includes: determining a task unit descriptor based on a scheduling unit descriptor and a virtual node context, where the virtual node context indicates resource information of a worker node to which a first device is mapped, the resource information includes a resource identifier and task unit type information of the first device, the task unit type information includes a task unit type that can be used by the first device, the task unit descriptor is description information of a task unit of the first device, and the description information includes a task unit type, a task unit name, and a task unit specification; and sending first information to the first device, where the first information indicates the first device to create a task unit instance, and the first information includes the task unit descriptor.

According to the computing node management method provided in this application, the virtual node context indicates resource information of a worker node that is obtained through mapping by using a first device, and the resource information includes a resource identifier and task unit type information of the first device. In other words, the resource information indicated by the virtual node context is related to the first device. The task unit type refers to a running manner of a computing task on the first device. The task unit refers to one or a group of execution entities that run the computing task. The execution entities include a process, a thread, a container, a lightweight virtual machine, a function, a class, a method, and another file or code block that can be loaded or executed, and may also include data required for running the computing task. For example, if the task unit directly runs in a host namespace, the task unit may be referred to as a local type (which is also referred to as a Native type); and if the task unit runs in a manner of a container, the task unit may be referred to as a container type (which is also referred to as a Container type). Alternatively, the task unit type may be customized based on a scenario. For example, if the first device supports computing migration at a granularity of a Java thread, the task unit type may be a Java thread type (which is also referred to as a JavaThread type). The task unit specification includes execution entity names and execution entity software package names of one or a group of execution entities existing when the task unit runs on the first device, an execution entry and a parameter list of an optional execution entity, and the like. In this technical solution, the second device can determine a task unit descriptor based on the scheduling unit descriptor and the virtual node context. The task unit descriptor may be identified by the first device. When the second device sends, to the first device, the first information that indicates the first device to create a task unit instance, the first information needs to include the task unit descriptor, so that the first device creates the task unit instance. Therefore, the computing task is scheduled to the first device.

With reference to the second aspect, in a possible implementation, the determining a task unit descriptor based on a scheduling unit descriptor and a virtual node context includes: selecting a task unit type on the worker node for a scheduling unit based on the virtual node context; and determining the task unit descriptor based on the scheduling unit descriptor and the task unit type.

With reference to the second aspect, in a possible implementation, before the determining a task unit descriptor based on a scheduling unit descriptor and a virtual node context, the method further includes: obtaining a resource registration request message from the first device, where the resource registration request message includes the resource information; and generating, based on the resource registration request message, the virtual node context existing when the first device is mapped to the worker node.

With reference to the second aspect, in a possible implementation, the method further includes: sending a resource registration response message to the first device, where the resource registration response message includes result information indicating that the first device is mapped to the worker node, and the result information includes a flag indicating whether resource registration is successful, for example, success or failure, and an optional failure reason.

With reference to the second aspect, in a possible implementation, the method further includes: generating a worker node descriptor of the worker node based on the virtual node context; sending the worker node descriptor to a control device; and obtaining the scheduling unit descriptor sent by the control device based on the worker node descriptor.

According to the computing node management method provided in this application, the second device can generate the worker node descriptor based on the virtual node context. Because the worker node descriptor can be identified by the control device, the control device may send the scheduling unit descriptor to the worker node to which the first device is mapped.

With reference to the second aspect, in a possible implementation, the method further includes: obtaining a migrate-out request message, where the migrate-out request message is used to request to migrate out a task unit context, and the task unit context includes a mapping relationship between the task unit descriptor and the worker node; and sending the task unit context.

According to the computing node management method provided in this application, the second device may obtain the migrate-out request message, to migrate out a task unit context and send the task unit context. In this technical solution, when the terminal device is handed over from one edge node to another edge node, related information of running a computing task of the terminal device on an original edge node may be migrated to a current edge node, that is, a process in which the control device reschedules a computing task on the terminal device when the terminal device is handed over is avoided.

According to a third aspect, this application provides a computing node management apparatus. The apparatus is used in a first device and includes:
a transceiver module, configured to obtain first information, where the first information indicates the first device to create a task unit instance, the first information includes a task unit descriptor, the task unit descriptor includes description information of a task unit of the first device, and the description information includes a task unit type, a task unit name, and a task unit specification; and a processing module, configured to create the task unit instance based on the task unit descriptor.

With reference to the third aspect, in a possible implementation, before obtaining the first information, the transceiver module is further configured to: send a resource registration request message, where the resource registration request message is used to request to map the first device to a worker node, the resource registration request message includes a resource identifier and task unit type information of the first device, and the task unit type information includes a task unit type that can be used by the first device.

With reference to the third aspect, in a possible implementation, the transceiver module is further configured to: obtain a resource registration response message from a second device, where the resource registration response message includes result information indicating that the first device is mapped to the worker node, and the result information includes a flag indicating whether resource registration is successful, for example, success or failure, and an optional failure reason.

According to a fourth aspect, this application provides a computing node management apparatus. The apparatus is used in a first device and includes: a virtual deviced module, configured to determine a task unit descriptor based on a scheduling unit descriptor and a virtual node context, where the virtual node context indicates resource information of a worker node to which a first device is mapped, the resource information includes a resource identifier and task unit type information of the first device, the task unit type information includes a task unit type that can be used by the first device, the task unit descriptor is description information of a task unit of the first device, and the description information includes a task unit type, a task unit name, and a task unit specification; and a resource mapping manager module, configured to send first information to the first device, where the first information indicates the first device to create a task unit instance, and the first information includes the task unit descriptor.

With reference to the fourth aspect, in a possible implementation, the virtual deviced module is specifically configured to: select a task unit type on the worker node for a scheduling unit based on the virtual node context; and determine the task unit descriptor based on the scheduling unit descriptor and the task unit type.

With reference to the fourth aspect, in a possible implementation, the resource mapping manager module is further configured to: obtain a resource registration request message from the first device, where the resource registration request message includes the resource information; and generate, based on the resource registration request message, the virtual node context existing when the first device is mapped to the worker node.

With reference to the fourth aspect, in a possible implementation, the resource mapping manager module is further configured to: send a resource registration response message to the first device, where the resource registration response message includes result information indicating that the first device is mapped to the worker node, and the result information includes a flag indicating whether resource registration is successful, for example, success or failure, and an optional failure reason.

With reference to the fourth aspect, in a possible implementation, the virtual deviced module is further configured to: generate a worker node descriptor of the worker node based on the virtual node context; send the worker node descriptor to a control device; and obtain the scheduling unit descriptor sent by the control device based on the worker node descriptor.

With reference to the fourth aspect, in a possible implementation, the virtual deviced module is further configured to: obtain a migrate-out request message, where the migrate-out request message is used to request to migrate out a task unit context, and the task unit context includes a mapping relationship between the task unit descriptor and the worker node; and send the task unit context.

According to a fifth aspect, this application provides a computing node management system. The management system includes a first device, a second device, and a control device, a task unit agent module is deployed in the first device, and the control device includes a worker node descriptor existing when the first device is mapped to a worker node. The control device is configured to allocate, based on the worker node descriptor existing when the first device is mapped to the worker node, a scheduling unit to the worker node and send a scheduling unit descriptor of the scheduling unit to the second device. The second device is configured to determine a task unit descriptor based on a scheduling unit descriptor and a virtual node context, where the virtual node context indicates resource information of a worker node to which a first device is mapped, the resource information includes a resource identifier and task unit type information of the first device, the task unit type information includes a task unit type that can be used by the first device, the task unit descriptor is description information of a task unit of the first device, and the description information includes a task unit type, a task unit name, and a task unit specification. The second device is further configured to send first information to the first device, where the first information indicates the first device to create a task unit instance, and the first information includes the task unit descriptor. The task unit agent module is configured to create the task unit instance based on the task unit descriptor.

With reference to the fifth aspect, in a possible implementation, the second device is specifically configured to: select a task unit type on the worker node for a scheduling unit based on the virtual node context; and determine the task unit descriptor based on the scheduling unit descriptor and the task unit type.

With reference to the fifth aspect, in a possible implementation, the task unit agent module is further configured to send a resource registration request message to the second device, where the resource registration request message is used to request to map the first device to a worker node, and the resource registration request message includes the resource information. The second device is further configured to: obtain the resource registration request message, and generate, based on the resource registration request message, the virtual node context existing when the first device is mapped to the worker node.

With reference to the fifth aspect, in a possible implementation, the second device is further configured to: generate a worker node descriptor of the worker node based on the virtual node context; send the worker node descriptor to a control device; and obtain the scheduling unit descriptor sent by the control device based on the worker node descriptor.

With reference to the fifth aspect, in a possible implementation, the second device is further configured to: obtain a migrate-out request message, where the migrate-out request message is used to request to migrate out a task unit context, and the task unit context includes a mapping relationship between the task unit descriptor and the worker node; and send the task unit context.

With reference to the fifth aspect, in a possible implementation, the control device is deployed on an edge node.

With reference to the fifth aspect, in a possible implementation, the control device is deployed on a cloud node.

According to a sixth aspect, this application provides a computing node management apparatus, including at least one processor and a memory, where the processor is coupled to the memory, the memory stores program instructions, and when the program instructions stored in the memory are executed by the processor, the computing node management apparatus is enabled to perform the computing node management method according to the first aspect, or the second aspect, or any possible implementation of the first aspect or the second aspect.

According to a seventh aspect, this application provides a computing node management apparatus, including a logic circuit and an input/output interface, where the input/output interface is configured to input or output instructions or information, and the logic circuit is configured to perform the method according to the first aspect or any possible implementation of the first aspect by executing the instructions or based on the information.

According to an eighth aspect, this application provides a computing node management apparatus, including a logic circuit and an input/output interface, where the input/output interface is configured to input or output instructions or information, and the logic circuit is configured to perform the method according to the second aspect or any possible implementation of the second aspect by executing the instructions or based on the information.

According to a ninth aspect, this application provides a computer-readable storage medium, where the computer-readable storage medium stores program instructions executed by a computer, and the program instructions are configured to perform the computing node management method according to the first aspect, or the second aspect, or any possible implementation of the first aspect or the second aspect.

According to a tenth aspect, this application provides a computer program product, where the computer program product includes computer program instructions, and when the computer program instructions are run on a computer, the computer is enabled to perform the computing node management method according to the first aspect, or the second aspect, or any possible implementation of the first aspect or the second aspect.

For technical effects brought by any one of the implementations of the third aspect to the tenth aspect, refer to technical effects brought by any one of the possible implementations of the first aspect, or refer to technical effects brought by any one of the possible implementations of the second aspect. Details are not described again.

### BRIEF DESCRIPTION OF DRAWINGS

FIG. 1 is a schematic architectural diagram of Kubernetes according to an embodiment of this application;
FIG. 2 is a schematic architectural diagram of KubeEdge according to an embodiment of this application;
FIG. 3 is a schematic architectural diagram of a computing node management system according to an embodiment of this application;
FIG. 4 is a schematic diagram of a structure of a computing node management system according to an embodiment of this application;
FIG. 5 is a schematic structural diagram in which a control device is deployed on a cloud node according to an embodiment of this application;
FIG. 6 is a schematic flowchart of a computing node management method according to an embodiment of this application;
FIG. 7 is a schematic flowchart of a computing node scheduling method according to an embodiment of this application;
FIG. 8 is a schematic flowchart of a computing node management method according to another embodiment of this application;
FIG. 9 is a schematic flowchart of a computing node registration method according to another embodiment of this application;
FIG. 10 is a schematic flowchart of a computing node handover method according to still another embodiment of this application;
FIG. 11 is a schematic diagram of a structure of a computing node management system according to an embodiment of this application;
FIG. 12 is a schematic diagram of a structure of a computing node management system according to another embodiment of this application;
FIG. 13 is a schematic diagram of a structure of a computing node management system according to another embodiment of this application;
FIG. 14 is a schematic diagram of a structure of a computing node management apparatus according to an embodiment of this application;
FIG. 15 is a schematic diagram of a structure of a computing node management apparatus according to another embodiment of this application;
FIG. 16 is a schematic diagram of a structure of a computing node management apparatus according to still another embodiment of this application; and
FIG. 17 is a schematic diagram of a structure of a computing node management apparatus according to an embodiment of this application.

### DESCRIPTION OF EMBODIMENTS

For ease of understanding, related terms used in this application are first described.

### 1. Kubernetes

Kubernetes is an open-source application that manages containerized applications on a plurality of nodes in a cluster. Kubernetes aims to make containerized application deployment simple and efficient. In Kubernetes, a plurality of containers can be created to run application instances. A built-in load balancing policy is used to manage, discover, and access the application instances. O&M personnel do not need to perform complex manual configuration and processing on details.

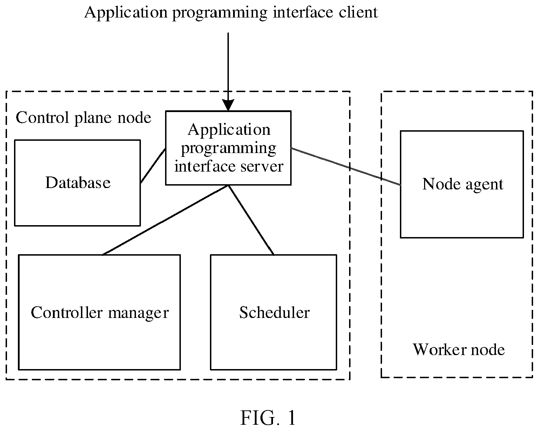

FIG. 1 shows related components of Kubernetes. As shown in FIG. 1, Kubernetes includes a control plane node and a worker node. The control plane node is mainly configured to manage the worker node, and the worker node is mainly configured to run a containerized application instance. Developers can manage Kubernetes through an application programming interface client (for example, kubectl) or an application programming interface (application programming interface, API) server. The control plane node includes a Kubernetes API server (which is referred to as a kube-apiserver), a scheduler (which is referred to as a kube-scheduler), a controller manager (which is referred to as a kube-controller manager), and a database (which is referred to as etcd). The worker node includes a node agent (which is referred to as kubelet).

The kube-apiserver is a unified external interface of a cluster control plane. The kube-scheduler is configured to schedule a pod (consisting of one or more containers) and allocate the pod to a worker node. The pod is a minimum scheduling unit of Kubernetes. The kube-controller manager includes a plurality of controllers provided by Kubernetes and is configured to manage Kubernetes resources. Etcd can be considered as storage and is used to store related data in the cluster. Kubelet is an agent deployed on a worker node, and is used to register a worker node with the kube-apiserver, manage pods, and report resource information of the worker node.

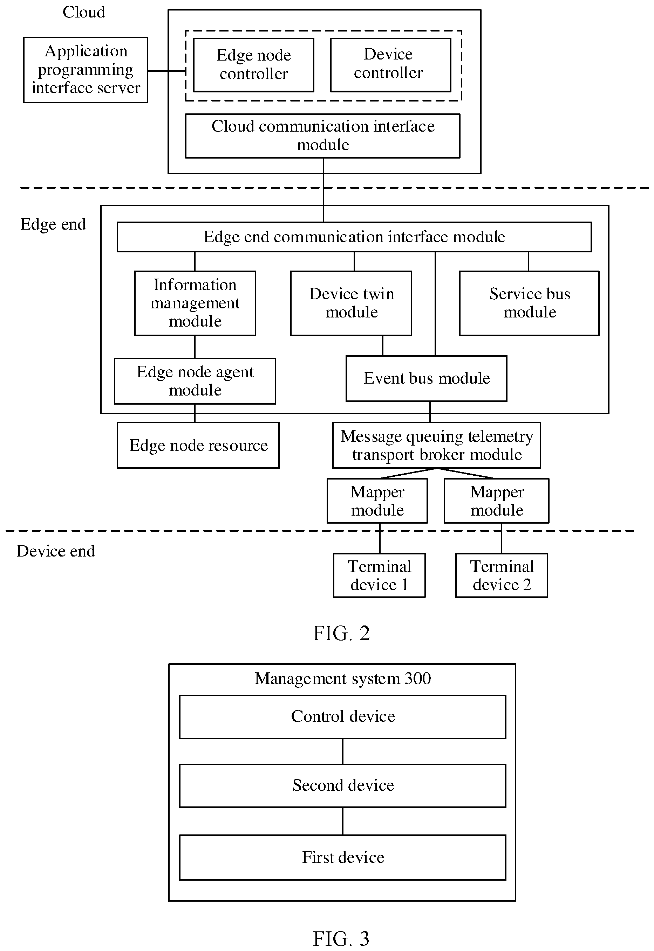

FIG. 2 shows a KubeEdge system in a conventional technology according to an embodiment of this application. The system may be divided into three parts, namely, cloud, an edge, and a device end.

The cloud includes an edge node controller (which is also referred to as EdgeController) module, a device controller (which is also referred to as DeviceController) module, and a cloud communication interface (which is also referred to as CloudHub) module. The EdgeController module is configured to implement cloud-edge synergy for edge node management and application status metadata. The DeviceController module is configured to implement cloud-edge synergy for accessing and managing a terminal device and metadata. The CloudHub module is configured to implement encapsulation of a communication message between the cloud and the edge end, and maintenance of a websocket (which is a full-duplex communication protocol based on a transmission control protocol) connection, and a QUIC (which is a multiplexing communication protocol based on the datagram protocol) connection. It may be understood that, the EdgeController module and the DeviceController module are respectively controllers in a control device, and interact with the Kubernetes API server by using a Kubernetes API.

The edge end includes an edge end communication interface (which is also referred to as EdgeHub) module, an information management (which is also referred to as MetaManager) module, a device twin (which is also referred to as DeviceTwin) module, a service bus (which is also referred to as ServiceBus) module, an edge node agent (which is also referred to as Edged) module, an event bus (which is also referred to as EventBus) module, an edge node resource, a message queuing telemetry transport (message queuing telemetry transport, MQTT) protocol broker (which is also referred to as MQTT broker) module, and a converter (which is also referred to as Mapper) module. The EdgeHub module is configured to implement communication between the edge end and the cloud. The MetaManager module is configured to implement local persistence of node-level metadata. The DeviceTwin module is configured to implement synchronization and persistence of a terminal device status. The ServiceBus module is configured to interact with a hypertext transfer protocol. The EventBus module is configured to convert an MQTT message into a message supported by the system. The Edged module is mainly configured to implement pod life cycle management in a lightweight manner. The edge node resource is a resource that can run an edge computing task in the system, for example, a central processing unit (central processing unit, CPU), a graphics processing unit (graphics processing unit, GPU), a memory, a hard disk (including a mechanical hard disk, a solid state disk, or the like), a network interface, and the like. The MQTT broker module provides a message interface by using an MQTT protocol. The Mapper module is configured to convert different transmission technologies or communication protocols at the device end into the MQTT protocol. For example, a terminal device 1 and a terminal device 2 use two different transmission technologies or communication protocols, but may be converted into the MQTT protocol by using the Mapper module, and interact with the MQTT broker module.

For the KubeEdge system shown in FIG. 2, when receiving a deployment request of a computing task, a control device in the cloud may generate a scheduling unit descriptor for the computing task, and send the scheduling unit descriptor and a name of a worker node to an edge node agent module of an edge node, so that the edge node agent module may allocate a resource to the computing task based on the scheduling unit descriptor. In addition, status management on the terminal device may be further implemented by using the MQTT broker module and the Mapper module.

For implementing status management on the terminal device by using the MQTT broker module and the Mapper module, refer to related technical descriptions. Details are not described herein again.

However, for the KubeEdge system shown in FIG. 2, currently, a terminal device cannot be used as a worker node, that is, a computing task cannot be deployed on the terminal device.

In view of this, this application provides a computing node management method. A terminal device is mapped to a worker node on an edge node, and a scheduling unit descriptor sent by a control device is converted into a task unit descriptor, so that a computing task scheduled by the control device is run on a terminal device that does not support a scheduling unit descriptor type, so as to deploy the computing task on the terminal device.

In addition, in this application, when receiving a resource registration request message of the terminal device, the control device further detects whether the terminal device is handed over from one edge node to another edge node. When determining that the terminal device is handed over, the control device migrates information related to running a computing task of the terminal device on an original edge node to an edge node on which the terminal device is located after the terminal device is handed over, to avoid a problem of re-scheduling by the control device.

FIG. 3 is a schematic architectural diagram of a computing node management system according to an embodiment of this application. As shown in FIG. 3, a management system 300 in this embodiment includes a control device, a second device, and a first device. The second device is also referred to as a virtual node management device.

The computing node management method provided in embodiments of this application may be applied to any communication system. The communication system may be a 3rd generation partnership project (3rd generation partnership project, 3GPP) communication system, for example, an LTE system, or may be an NR system or an NR V2X system in 5G, or may be applied to a system in hybrid networking of LTE and 5G, or a device-to-device (device-to-device, D2D) communication system, a machine to machine (machine to machine, M2M) communication system, or Internet of Things (Internet of Things, IoT), a frequency division duplex (frequency division duplex, FDD) system, a time division duplex (time division duplex, TDD) system, a satellite communication system, and another next-generation communication system (for example, a 6G system), or may also be a non-3GPP communication system. This is not limited herein.

The computing node management method provided in embodiments of this application may be applied to various communication scenarios, for example, may be applied to one or more of the following communication scenarios: enhanced mobile broadband (enhanced mobile broadband, eMBB), ultra reliable low latency communication (ultra reliable low latency communication, URLLC), machine type communication (machine type communication, MTC), Internet of Things (Internet of Things, IoT), narrow band Internet of Thing (narrow band Internet of Thing, NB-IoT), customer premise equipment (customer premise equipment, CPE), augmented reality (augmented reality, AR), virtual reality (virtual reality, VR), and massive machine type communications (massive machine type communications, mMTC), device to device (device to device, D2D), vehicle to everything (vehicle to everything, V2X), vehicle to vehicle (vehicle to vehicle, V2V), and the like.

It should be noted that, in this embodiment, the first device may be a terminal device, for example, a mobile phone (mobile phone), a tablet computer (Pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like, or may be a terminal connected by using a wired network, or may be a network node, for example, a physical server in a data center, a virtual machine in a cloud computing environment, or a communication network element having a computing function. This is not limited herein.

In the management system 300, a task unit agent module is deployed in the first device, and the second device includes a worker node obtained by mapping the first device. In this application, the worker node obtained by mapping the first device is also referred to as a virtual node. The first device is connected to the control device by using the virtual node management device.

In the management system 300, the control device may be deployed in two manners. In a first manner, the control device and the virtual node management device are deployed on an edge node together. In a second manner, the control device is deployed on a cloud node.

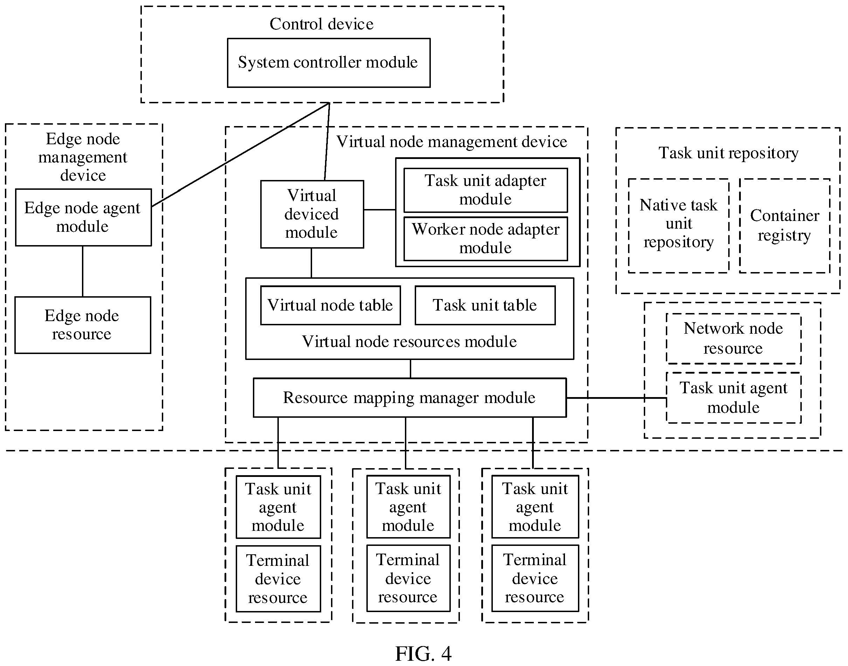

A schematic diagram of a structure of a computing node management system is provided in detail below with reference to FIG. 4.

As shown in FIG. 4, in this manner, the computing node management system further includes an edge node management device and a task unit repository. The edge node management device includes an edge node agent module and an edge node resource. The task unit repository includes a native task unit repository and a container registry. Optionally, the task unit repository may be deployed on an edge node, or may be deployed at another location. This is not limited in this application.

In this manner, the control device includes a system controller module, configured to: schedule a computing task and deploy the computing task on an edge node resource in an edge node management device, or schedule a computing task and deploy the computing task on a resource corresponding to a worker node in a virtual node management device to which a terminal device or a network node is mapped.

The edge node management device includes an edge node agent module and an edge node resource. The edge node agent module is configured to manage the edge node resource, register an edge node with the system controller module, and receive scheduling information of the system controller module. The edge node resource is used to provide a resource for a computing task.

The virtual node management device includes a task unit adapter module, a worker node adapter module, a virtual deviced module, a virtual node resources module, and a resource mapping manager module.

The task unit adapter module is configured to receive a scheduling unit descriptor and a task unit type, and convert the scheduling unit descriptor into a task unit descriptor of a task unit suitable for running on the terminal device or the network node.

The scheduling unit descriptor is description information of a scheduling unit defined by the system controller module, and includes a scheduling unit name, and a scheduling unit namespace, specification, and status, for example, description information of a pod (which may be considered to be formed by one or more containers) in Kubernetes. The scheduling unit is a minimum scheduling unit defined by the system controller module, for example, a pod in Kubernetes. The task unit type is a running manner of a task unit allocated to the terminal device or the network node. For example, if the task unit directly runs in a host namespace, the task unit type is a local (which is also referred to as Native) type; if the task unit runs in a manner of a container, the task unit type is a container (which is also referred to as Container) type; or more specifically, if the task unit runs in a manner of a Java thread, the task unit type is a Java thread (which is also referred to as JavaThread) type.

The task unit is a minimum functional unit for running a computing task on the terminal device or the network node, and includes one or a group of execution entities for running the computing task and optional data required for running the computing task. The execution entity includes a process, a thread, a container, a lightweight virtual machine, a function, a class, a method, or another file or code block that can be loaded or executed. The task unit descriptor is description information of a task unit, including a task unit type, a task unit name, a task unit specification, and the like.

The worker node adapter module is configured to receive a virtual node context in a virtual node table and convert the virtual node context into a worker node descriptor suitable for the system controller module. The worker node descriptor is description information of a worker node defined by the system controller module, and includes a node name, specification, status, and the like.

The virtual deviced module is configured to manage resources of one or more virtual nodes, including: detecting a change of a virtual node table in virtual node resources, and registering the virtual node as a worker node of the system controller module; receiving scheduling information of the system controller module, obtaining a scheduling unit descriptor, invoking a task unit type selector to obtain a task unit type of the virtual node, invoking a task unit adapter to convert the scheduling unit descriptor into a task unit descriptor corresponding to the task unit type, generating a task unit context, and writing the task unit context into a task unit table of the virtual node resources.

The task unit type selector is configured to select a task unit type of a scheduling unit on a virtual node.

The virtual node resources module includes a virtual node table and a task unit table. The virtual node table includes a virtual node context. The virtual node context includes a virtual node identifier, a virtual node group, a task unit type list, a virtual node address, total resource quantity information, allocatable resource information, a virtual node status, and the like. The virtual node identifier is used to uniquely identify the virtual node. The virtual node group is a group formed by virtual nodes that can perform resource sharing. For a scheduling unit that is allowed to be allocated to the group, the system controller module selects a proper virtual node from the group, and allocates the scheduling unit to the virtual node. The task unit type list is used to describe one or more task unit types supported by the virtual node. The total resource quantity information includes a total CPU quantity, a total memory quantity, and a total storage quantity. The allocatable resource information includes a quantity of allocatable CPUs, a quantity of allocatable memories, and a quantity of allocatable storage. Node system information is defined by the system controller module, and includes a machine identifier, a globally unique system identifier, a kernel version, a node architecture, and the like. The task unit table includes a task unit context. The task unit context includes a task unit name, a task unit descriptor, a virtual node identifier, a task unit phase, a task unit status, a scheduling unit name, a scheduling unit namespace, and the like. The task unit name is used to uniquely identify the task unit. The task unit phase is a running phase of the scheduling unit defined by the system controller module, and is used to indicate a running phase of the task unit herein.

The resource mapping manager module is configured to receive a resource registration request message, map a resource to a virtual node on an edge node, allocate an Internet Protocol (Internet Protocol, IP) address to the virtual node, generate a virtual node context, and write the virtual node context into a virtual node table of virtual node resources; or receive a status update message, and if a message type is a resource status update message, update a corresponding field of a corresponding virtual node context in the virtual node table of the virtual node resources; if the message type is a task unit status update message, update a corresponding field of a corresponding task unit context in a task unit table of the virtual node resources; or detect a status of the task unit table of the virtual node resources, and send a task unit management request message; if a task unit context is newly added, and a task unit status is set to a preset flag indicating that a task unit is being created, for example, "creating", send a task unit creation request message to a task unit agent module corresponding to the allocated virtual node; or if a task unit status is set to a preset flag indicating that a task unit is being deleted, for example, "deleting", send a task unit deletion request message to a task unit agent module corresponding to the allocated virtual node; or set a first timer, and if the resource status update message is not received when a preset threshold arrives, it is considered that the resource is invalid, and a virtual node status of the virtual node context and task unit statuses of all task unit contexts corresponding to the virtual node identifier are set to a preset flag indicating an invalid virtual node, for example, "a node is invalid"; or set a second timer, and if a preset threshold is reached, delete a virtual node context corresponding to an invalid virtual node from the virtual node table, and delete all task unit contexts corresponding to the invalid virtual node from the task unit table.

The task unit agent module is configured to send a resource registration request message, and complete registration of a schedulable resource with the system controller module. The schedulable resource is a resource that can be used to run a task unit allocated by the system controller module, for example, may be all physical resources of the terminal device or the network node, or may be an isolated resource isolated from a physical resource by using a technology such as virtualization. This is not limited in this application. The resource includes a CPU, a GPU, a memory, a hard disk (including a mechanical hard disk, a solid state disk, or the like), a network interface, and the like. The status update message is sent, including the resource status update message and the task unit status update message; or the task unit management request message is received; if the message type is a task unit creation request message, a task unit instance is created; or if the message type is a task unit deletion request message, a corresponding task unit instance deleted.

Messages between the resource mapping manager module and the task unit agent module may be classified into three types, namely, a resource registration message, a status update message, and a task unit management message.

For example, Table 1 is a message list of the resource mapping manager module and the task unit agent module.

**Table 1**

| Message type | Message name | Message parameter |
|---|---|---|
| Resource registration | Resource registration request | Message type, resource identifier, resource group, task unit type list, total resource quantity information, allocatable resource information, and optional node system information |
| | Resource registration response | Message type and response result |
| Status update | Resource status update | Message type, resource identifier, total resource quantity information, allocatable resource information, and resource status |
| | Task unit status update | Message type, task unit name, task unit phase, and task unit status |
| Task unit management | Task unit creation request | Message type and task unit descriptor |
| | Task unit deletion request | Message type and task unit name |

Optionally, the native task unit repository provides an interface for uploading and downloading an execution entity software package of a native task unit. The native task unit refers to one or a group of execution entities that directly run in a local host namespace of the terminal device or the network node and optional data required for running the execution entity, for example, a group of executable files, a dynamic link library, a Java Jar package, a Java class file, a Java bytecode file, a JavaScript code file, a Python code file, a configuration file, and an artificial intelligence (artificial intelligence, AI) model. The container registry is configured to provide a container image. In addition, the task unit repository may also include a software repository or an image repository of a customized task unit type, for example, a Java Jar package repository or a lightweight virtual machine image repository. This is not limited in this application.

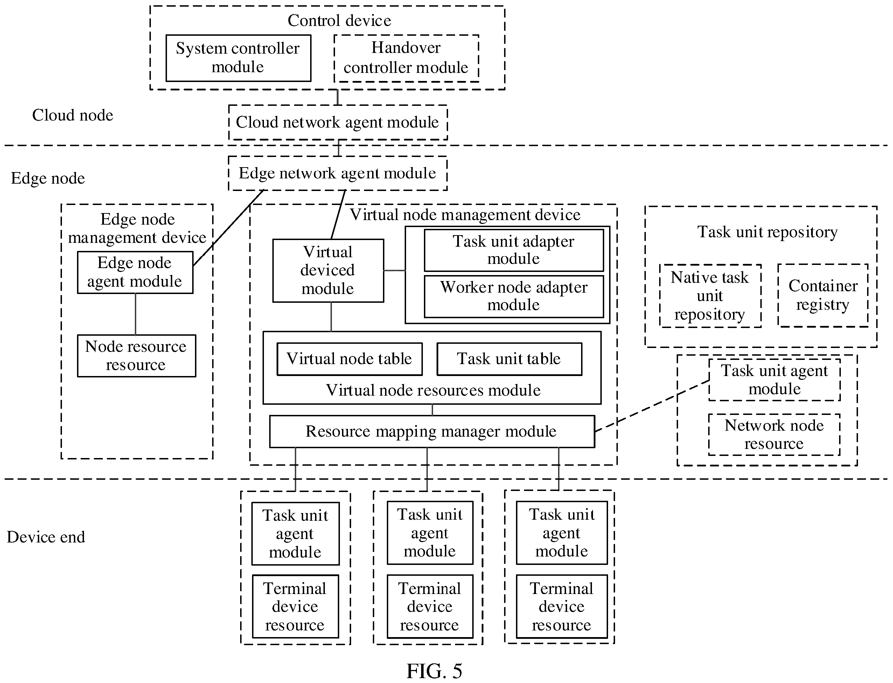

A schematic structural diagram in which a control device is deployed on a cloud node is provided in detail below with reference to FIG. 5.

As shown in FIG. 5, in this manner, a control device is deployed on a cloud node, an edge node management device and a virtual node management device are deployed on an edge node, and the control device may be connected to an edge node management device and a virtual node management device on one or more edge nodes.

Optionally, the task unit repository may be deployed at an edge node, or may be deployed at another location.

Optionally, the control device in this manner may further include a handover controller module, configured to: when the first device is handed over from one edge node to another edge node, migrate, to a virtual node management device in the another edge node, a task unit context corresponding to a virtual node of a worker node in the virtual node management device to which the first device is mapped.

The cloud node includes one or more physical servers, virtual machines, and the like, and may be provided by an existing public cloud, or may be provided by a self-built private cloud, or may be provided by a hybrid cloud. In addition, the private cloud may be located at a remote end or may be located at a local end. This is not limited in this embodiment of this application. The edge node includes one or more physical servers, virtual machines, and the like that are deployed at an edge end. A manner of obtaining the one or more physical servers, virtual machines, and the like is not limited in this embodiment of this application. In this manner, because there may be an unreliable network connection between the cloud node and the edge node. In view of this, in this manner, a cloud network agent module is further deployed on the cloud node, and an edge network agent module is deployed on the edge node.

It should be noted that, in the structure shown in FIG. 5, for detailed descriptions of components other than the cloud network agent module and the edge network agent module, refer to the embodiment shown in FIG. 4. Details are not described herein again.

It may be understood that when a network connection between the edge node and the cloud node is relatively stable, the cloud network agent module and the edge network agent module may not be included. This is not limited in this embodiment of this application.

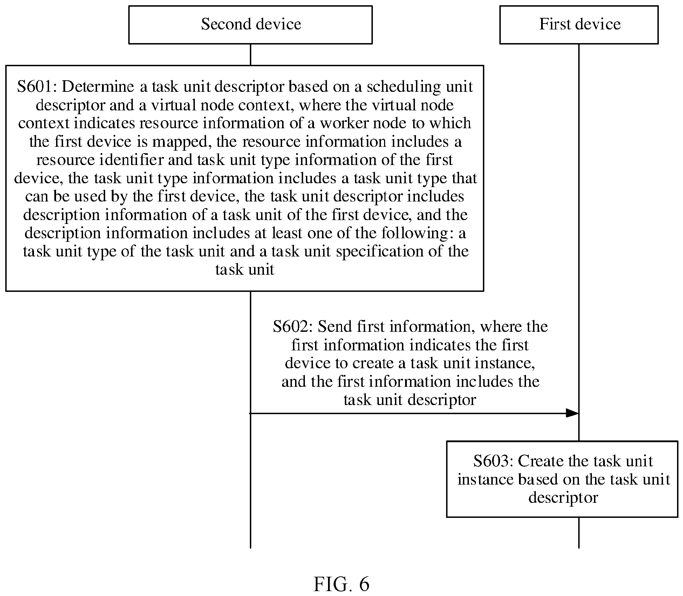

FIG. 6 is a schematic flowchart of a computing node management method according to an embodiment of this application. The computing node management method may be applied to the computing node management system in FIG. 4 or FIG. 5. As shown in FIG. 6, the method in this embodiment may include S601, S602, and S603.

S601: Determine a task unit descriptor based on a scheduling unit descriptor and a virtual node context, where the virtual node context indicates resource information of a worker node to which a first device is mapped, the resource information includes a resource identifier and task unit type information of the first device, the task unit type information includes a task unit type that can be used by the first device, the task unit descriptor includes description information of a task unit of the first device, and the description information includes at least one of the following: a task unit type of the task unit and a task unit specification of the task unit.

The scheduling unit descriptor is description information of a scheduling unit, including a scheduling unit name, a scheduling unit namespace, specification, status, and the like. For example, if a scheduling unit of a Kubernetes system is a pod, and a corresponding scheduling unit descriptor may be pod description information. For a specific implementation process, refer to related technical descriptions. Details are not described herein again.

It may be understood that, when there is a computing task that needs to be deployed, the computing node management system first allocates a worker node to a scheduling unit corresponding to the computing task, so as to complete deployment of the computing task. Therefore, for the computing node management system, resource information included in each worker node included in the computing node needs to be learned. It should be noted that, for detailed descriptions of the worker node, refer to related technical descriptions. Details are not described herein again.

In this embodiment, for the worker node obtained by mapping the first device, resource information included in the worker node is indicated by using a virtual node context. In addition, in this embodiment, the resource information includes a resource identifier and task unit type information of the first device, that is, the resource information actually corresponds to resource information of the first device. The task unit type information includes a task unit type that can be used by the first device. Therefore, when a scheduling task is allocated to a worker node to which the first device is mapped, resource information of the first device that can be scheduled for a computing task may be learned by using a virtual node context corresponding to the worker node.

In this embodiment, although the first device itself cannot be used as a worker node, because a second device includes the worker node to which the first device is mapped, and the worker node may be identified by a control device of the computing node management system, when the computing node management system allocates a resource to the scheduling unit, the resource may be allocated to the worker node to which the first device is mapped.

It may be further understood that, to schedule the computing task to the first device, the scheduling unit descriptor may not be identified by the first device, so that the first device cannot allocate a corresponding resource to the computing task. Therefore, in this embodiment, the scheduling unit descriptor is converted into a task unit descriptor that can be identified by the first device, so that a computing task can be run on the first device that does not support a scheduling unit type. The task unit descriptor refers to description information of a minimum functional unit allocated to the first device for running a computing task, and includes a task unit type, a task unit name, a task unit specification, and the like. The task unit specification includes execution entity names and execution entity software package names of one or a group of execution entities existing when the task unit runs on the first device, an execution entry and a parameter list of an optional execution entity, and the like.

In a possible implementation, the scheduling unit descriptor may be converted into the task unit descriptor based on a preset conversion rule. This is not limited in this embodiment of this application.

S602: The second device sends first information to the first device, where the first information indicates the first device to create a task unit instance, and the first information includes the task unit descriptor; and correspondingly, the first device receives the first information.

It should be understood that the worker node in this embodiment is obtained by mapping the first device, and the worker node actually does not include any resource. The first device should allocate a resource to the scheduling unit. Therefore, after obtaining the task unit descriptor, the second device sends the first information to the first device to indicate the first device to create a task unit instance. In addition, the first information sent to the first device includes the task unit descriptor.

S603: The first device creates the task unit instance based on the task unit descriptor.

After receiving the first information, the first device may manage included resources, and allocate a corresponding resource to the computing task, that is, create the task unit instance.

According to the computing node management method provided in this embodiment of this application, because a first device is mapped to a worker node, a scheduling unit may be allocated to a worker node to which the first device is mapped. In addition, because a second device may convert a scheduling unit descriptor into a task unit descriptor adapted to the first device, that is, the scheduling unit is decoupled from a task unit of the first device in terms of a type and a running manner, a computing task can run on the first device that does not support the scheduling unit type.

In a possible implementation, S601 may include: selecting a task unit type on the worker node for a scheduling unit based on the virtual node context; and determining the task unit descriptor based on the scheduling unit descriptor and the task unit type.

For descriptions of the task unit type, refer to the foregoing descriptions. Details are not described herein again.

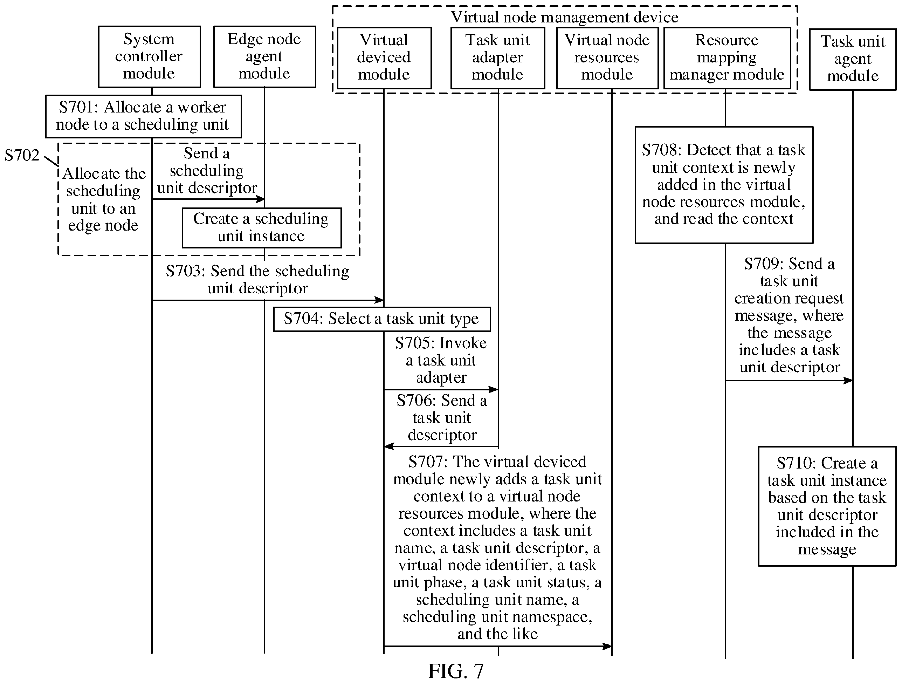

The following describes a computing node scheduling method with reference to FIG. 7 by using an example in which the first device is a terminal device and the system shown in FIG. 4 or FIG. 5. The method may include S701, S702, S703, S704, S705, S706, S707, S708, S709, and S710.

S701: A system controller module allocates a worker node to a scheduling unit.

S702: If the scheduling unit is allocated to an edge node, the system controller module sends a scheduling unit descriptor to an edge node agent module, and the edge node agent module creates a scheduling unit instance on the edge node.

For an implementation process of this step, refer to related technical descriptions. Details are not described herein again.

S703: If the scheduling unit is allocated to a virtual node to which the first device is mapped, the system controller module sends the scheduling unit descriptor to a virtual deviced module.

S704: The virtual deviced module invokes a task unit type selector to select a task unit type on the virtual node for the scheduling unit.

The task unit type selector is configured to select a task unit type.

It may be understood that the task unit type is a running manner of a task unit allocated to the first device. For example, if the task unit directly runs in a host namespace, the task unit type is a Native type; if the task unit runs in a manner of a container, the task unit type is a Container type; or more specifically, if the task unit runs in a manner of a Java thread, the task unit type is a JavaThread type.

It may be further understood that, for the first device, there may be a plurality of manners of running a task unit. Therefore, to enable the first device to run a task unit, a type of the task unit running on the first device needs to be selected for the task unit from the plurality of running manners, or a task unit type suitable for the task unit to run on the first device may be selected based on a preset rule.

In this embodiment, to obtain a task unit type existing when the scheduling unit finally runs on the first device, a task unit type selector is used for implementation. The task unit type selector may be implemented in a plurality of manners. This is not limited in this embodiment of this application.

S705: The virtual deviced module invokes a task unit adapter module, where parameters include a scheduling unit descriptor, a task unit type, and the like.

S706: The virtual deviced module obtains an adapted task unit descriptor from the task unit adapter module.

S707: The virtual deviced module newly adds a task unit context to a virtual node resources module, where the context includes a task unit name, a task unit descriptor, a virtual node identifier, a task unit phase, a task unit status, a scheduling unit name, a scheduling unit namespace, and the like, where a value of the task unit phase is null, and the task unit status is set to a preset flag indicating that the task unit is being created, for example, "creating".

S708: A resource mapping manager module detects that a task unit context is newly added in the virtual node resources module, and reads the context.

S709: If the task unit status in the task unit context is a preset flag indicating that a task unit is being created, for example, "creating", the resource mapping manager module sends a task unit creation request message to a task unit agent module corresponding to the virtual node, where the message includes a task unit descriptor.

S710: The task unit agent module receives the task unit creation request message, and based on the task unit descriptor included in the message, optionally, if an execution entity software package, a container image, or code and data file of a customized task unit type required for running the task unit do not exist on the terminal device, downloads the execution entity software package, the container image, and the customized code and data file from a task unit repository, and then creates a task unit instance.

It should be noted that, after the task unit instance is created, the task unit agent module and the virtual deviced module respectively maintain a task unit status by using an independent time period or event triggering. In other words, the task unit agent module maintains status synchronization from the task unit instance to the task unit context on the terminal device or the network node, and the virtual deviced module maintains status synchronization from the task unit context to a scheduling unit of the system controller module.

According to the computing node management method provided in this implementation, the task unit adapter module may convert a scheduling unit descriptor into a task unit descriptor, so that a computing task scheduled by the system controller module runs on the terminal device that does not support a scheduling unit type, and the resource mapping manager module detects a change in a task unit table in the virtual node resources module and sends a creating unit request message to the task unit agent module, to deploy the computing task on the first device.

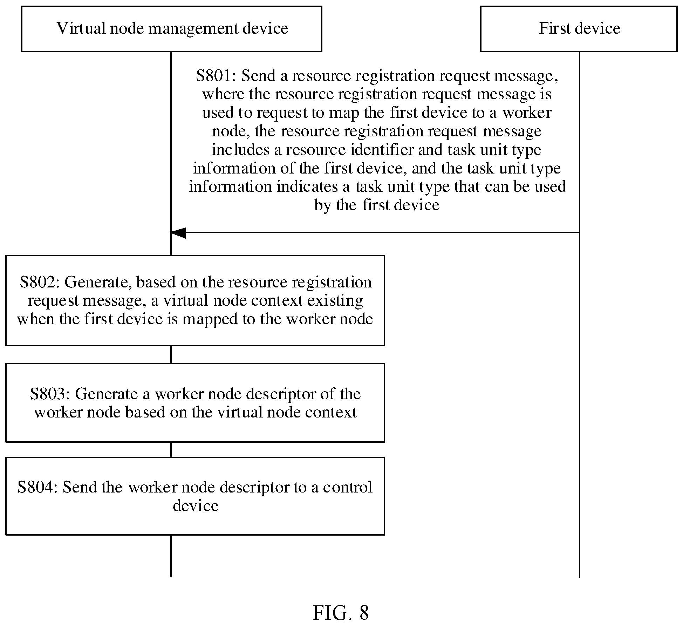

It should be understood that, if a resource needs to be allocated to the computing task on the terminal device or the network node, a prerequisite is that the terminal device or the network node becomes a worker node. A schematic flowchart of a computing node management method according to another embodiment of this application is described below with reference to FIG. 8. The computing node management method may be applied to the computing node management system in FIG. 4 or FIG. 5, and can map, by using a virtual node management device, the first device to a worker node that can be identified by the system. It should be noted that, in this application, the worker node that can be identified and that is mapped by the first device by using the virtual node management device is also referred to as a virtual node.

As shown in FIG. 8, the method in this embodiment may include S801, S802, and S803.

S801: A first device sends a resource registration request message to a virtual node management device, where the resource registration request message is used to request to map the first device to a worker node, the resource registration request message includes a resource identifier and task unit type information of the first device, and the task unit type information indicates a task unit type that can be used by the first device.

The resource identifier is an identifier of a schedulable resource on the first device, and is used to uniquely identify the schedulable resource. The resource identifier may be an identifier of the terminal device or the network node, or may be an identifier of an application or a user that applies for a resource from a physical resource, or may be an identifier allocated when the system allocates an isolated resource. This is not limited in this embodiment of this application.

The task unit type information may be considered as a description of a type of the task unit that can be supported by the first device. For example, if the terminal device supports direct running of the task unit in a local host namespace, a task unit type list may include a native type. In an implementation, the task unit type information may be represented by using a list.

S802: The virtual node management device generates, based on the resource registration request message, the virtual node context existing when the first device is mapped to the worker node.

For example, the first device is a terminal device. It may be understood that, if a computing task needs to be run on the terminal device, a prerequisite is that the terminal device becomes a worker node, and resource information included in the worker node should be learned by a computing node management system. In this way, when a computing task needs to be allocated, the computing task may be allocated to the worker node. Therefore, in this embodiment of this application, resource information of the terminal device is mapped to the virtual node context based on the resource registration request message, and the virtual node context may be considered as information included in a virtual node.

It may be understood that, after the virtual node management device generates the virtual node context based on the resource registration request message, S803 to S804 may be further included.

S803: Generate a worker node descriptor of the worker node based on the virtual node context.

For a control device, the control device may determine, by using the worker node descriptor, whether a node is a worker node to which a computing task can be allocated. Therefore, in this embodiment of this application, the worker node descriptor that can be identified by the control device is generated based on the resource registration request message and the virtual node context of the worker node to which the first device is mapped. In this way, the worker node descriptor can be used by the control device to schedule a computing task.

For the generating a worker node descriptor of the worker node based on the virtual node context, mapping may be performing mapping based on a preset mapping table, or mapping is performed based on a mapping rule, or mapping may be in another manner. This is not limited in this embodiment of this application.

S804: Send the worker node descriptor to a control device.

It may be understood that after sending the worker node descriptor to the control device, the virtual node management device may register a node corresponding to the worker node descriptor as a worker node. For example, a node corresponding to the worker node descriptor is registered as a worker node by invoking a "create node" interface of the control device. For details, refer to related technical descriptions. Details are not described herein again.

According to the method provided in this embodiment of this application, the virtual node management device converts the resource registration request message into a virtual node context, and then converts the virtual node context into a worker node descriptor that can be identified by the control device. Therefore, when receiving a worker node descriptor of the worker node to which the first device is mapped, the control device considers that a node corresponding to the worker node descriptor is a worker node, so that a computing task can be allocated to the worker node to which the first device is mapped, so as to further schedule the computing task to the first device.

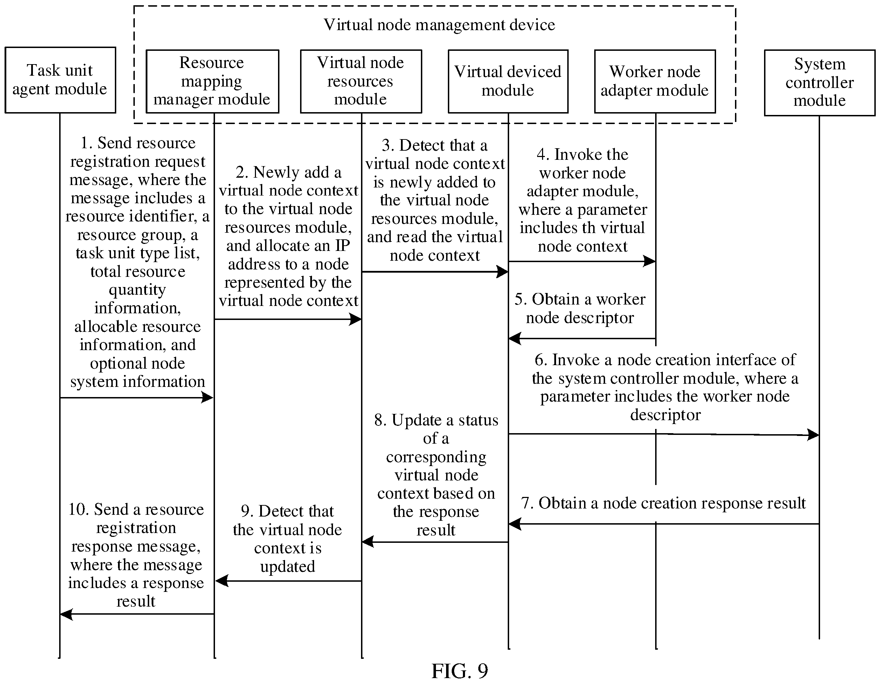

The following uses FIG. 4 or FIG. 5 as an example to describe an implementation of a computing node registration method with reference to FIG. 9. The implementation may include the following steps.

Step 1: The task unit agent module sends a resource registration request message to the resource mapping manager module, where the message includes a resource identifier, a resource group, a task unit type list, total resource quantity information, allocatable resource information, and optional node system information.

Step 2: The resource mapping manager module newly adds a new virtual node context in the virtual node resources module based on the resource identifier, the resource group, the task unit type list, the total resource quantity information, the allocatable resource information, and the optional node system information, and allocates an Internet Protocol (Internet Protocol, IP) address to a node represented by the virtual node context, where a virtual node status is set to a preset flag indicating that the virtual node is being created, for example, "creating".

The resource group refers to an identifier of a group formed by resources that can be shared. The system controller module may manage and schedule a computing task in the group.

The IP address may be an Internet Protocol version 4 (Internet Protocol version 4, IPv4), or may be an Internet Protocol version 6 (Internet Protocol version 6, IPv6). This is not limited in this embodiment of this application.

Step 3: The virtual deviced module detects that a virtual node context is newly added to the virtual node resources module, and reads the context.

Step 4: If the virtual node status of the virtual node context is a preset flag indicating that a virtual node is being created, for example, "creating", the virtual deviced module invokes a worker node adapter module, where a parameter includes the virtual node context.

Step 5: The virtual deviced module obtains an adapted worker node descriptor of the system controller module from the worker node adapter module.

Step 6: The virtual deviced module invokes a "create node" interface of the system controller module, where a parameter includes the worker node descriptor, and registers a node represented by the virtual node context as a worker node of the system controller module.

Optionally, after registering the node represented by the virtual node context as a worker node of the system controller module, the method may further include the following steps.

Step 7: The virtual deviced module obtains a node creation response result.

Step 8: The virtual deviced module updates a status of a corresponding virtual node context based on the response result.

Step 9: The resource mapping manager module detects that the virtual node context is updated.

Step 10: The resource mapping manager module sends a resource registration response message to the task unit agent module, where the message includes a response result.

It should be noted that, after the virtual node is created and registered, the task unit agent module and the virtual deviced module respectively maintain a resource status by using an independent time period or event triggering. In other words, the task unit agent module maintains status synchronization from a resource on the terminal device or the network node to the virtual node context, and the virtual deviced module maintains status synchronization from the virtual node context to a worker node of the system controller module.

In this implementation, the resource mapping manager module and the worker node adapter module complete conversion from the resource registration request message to the worker node descriptor, so that the first device is converted into a worker node by using the virtual node management device.

It should be noted that, the task unit agent module may also be deployed on a network node, to register all physical resources of the network node, or an isolated resource isolated from a physical resource by using a technology such as virtualization, as a worker node in the virtual node management device. A resource registration procedure and a scheduling unit deployment procedure of the network node are the same as a resource registration procedure and a scheduling unit deployment procedure of the terminal device, and details are not described herein again.

In an optional embodiment, if the first device is handed over from one edge node to another edge node, the method may further include: obtaining, by the second device, a migrate-out request message, where the migrate-out request message is used to request to migrate out a task unit context of the first device on an original edge node, and the task unit context includes a mapping relationship between the task unit descriptor and the worker node; and sending the task unit context.

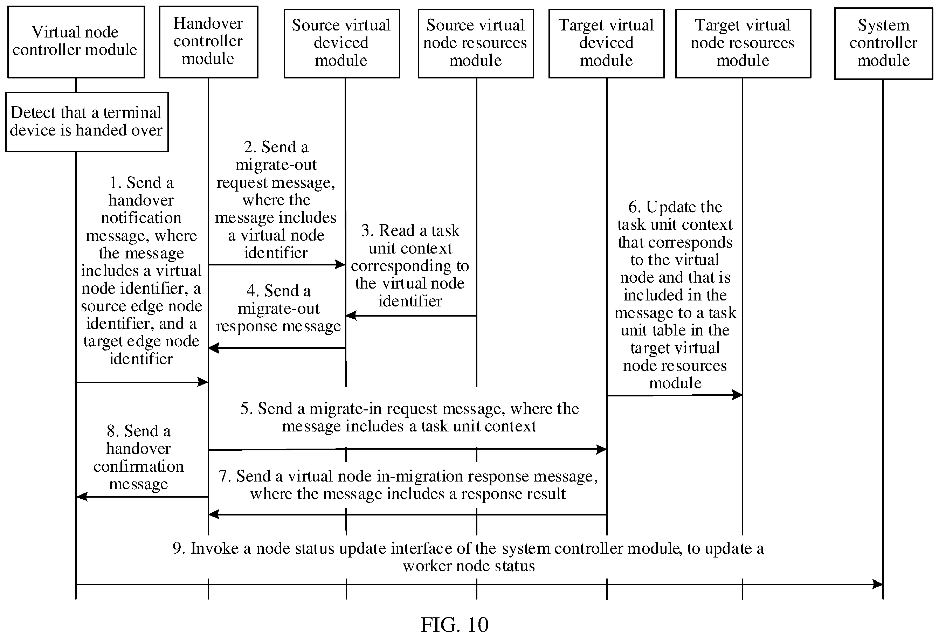

The following describes another computing node management method with reference to FIG. 10 by using an example in which the first device is a terminal device and the system structure in FIG. 4 or FIG. 5. In this method, a virtual node controller module is newly added in the control device, and is used as an intermediary from the virtual deviced module to the system controller module, to forward or modify an interface invocation message from the virtual deviced module to the system controller module.

As shown in FIG. 10, in this method, an edge node on which the terminal device is located before handover is referred to as a source edge node, a virtual deviced module in the source edge node on which the terminal device is located is referred to as a source virtual deviced module, a virtual node resources module in the source edge node is referred to as a source virtual node resources module, an edge node on which the terminal device is located after handover is referred to as a target edge node, and a virtual deviced module in the target edge node is referred to as a target virtual deviced module, a virtual node resources module in the target edge node is referred to as a target virtual node resources module. The handover method includes the following steps.

Step 1: If the virtual node controller module detects that the terminal device is handed over, the virtual node controller module sends a handover notification message to a handover controller module, where the message includes a virtual node identifier, a source edge node identifier, and a target edge node identifier.

Handover of the terminal device means that the terminal device is handed over from one edge node to another edge node.

It should be understood that a worker node descriptor that can be identified by the control device includes a worker node name and an edge node identifier of an edge node on which the worker node is located. In this case, the name of the worker node in the worker node descriptor that is of the virtual node and that is obtained by mapping the first device is the virtual node identifier, and also includes the edge node identifier of the edge node on which the virtual worker node is located. However, for a same virtual node, a virtual node identifier corresponding to the virtual node remains unchanged. Therefore, the virtual node controller module may determine, based on the virtual node identifier and the edge node identifier that are obtained from the received worker node descriptor, whether the terminal device is handed over.

In a possible implementation, a table of "a correspondence between a virtual node identifier and an edge node identifier" may be preset, and then whether the terminal device is handed over is determined based on the table. For example, if virtual node identifiers are the same, but edge node identifiers are different, it is considered that a terminal device corresponding to the virtual node moves from one edge node to another edge node, that is, handover occurs.

Step 2: The handover controller module sends a migrate-out request message to the virtual deviced module on the source edge node, where the message includes a virtual node identifier.

In this embodiment, the source edge node may be considered as an edge node on which the terminal device is located before the handover.

Step 3: The source virtual deviced module receives the migrate-out request message, searches a virtual node table in a virtual node resources module for a virtual node context corresponding to the virtual node identifier, sets a virtual node status of the context to a preset flag indicating that the context has been migrated, for example, "migrated", and reads all task unit contexts corresponding to the virtual node identifier in the task unit table.

Step 4: The source virtual deviced module sends a migrate-out response message to the handover controller module, where the message includes all task unit contexts corresponding to the virtual node.

Step 5: The handover controller module receives a virtual node out-migration response message, and sends a virtual node in-migration request message to the virtual deviced module on the target edge node, where the message includes all task unit contexts corresponding to the virtual node.

Step 6: The target virtual deviced module receives the virtual node in-migration request message, and updates the task unit context included in the message to a task unit table in the target virtual node resources module.

Step 7: The target virtual deviced module sends a virtual node in-migration response message to the handover controller module, where the message includes a response result.

Step 8: The handover controller module receives the virtual node in-migration response message, and the response result indicates that the migration is successful, and sends a handover acknowledgment message to the virtual node controller module.

Step 9: The virtual node controller module receives the handover acknowledgment message, invokes an "update node status" interface of the system controller, where parameters include a worker node name and a worker node descriptor of the system controller module, and requests the system controller module to update a worker node status.

In this implementation, when the virtual node controller module receives a node registration request message, if it is detected that a terminal device corresponding to the virtual node is handed over, the handover controller module is triggered to perform task unit context migration, and at the same time, a "create node" interface invoked by the system controller module is changed to an "update node status" interface, so that the system controller module can be prevented from deleting or creating a worker node when the terminal device is handed over, thereby avoiding unnecessary rescheduling.

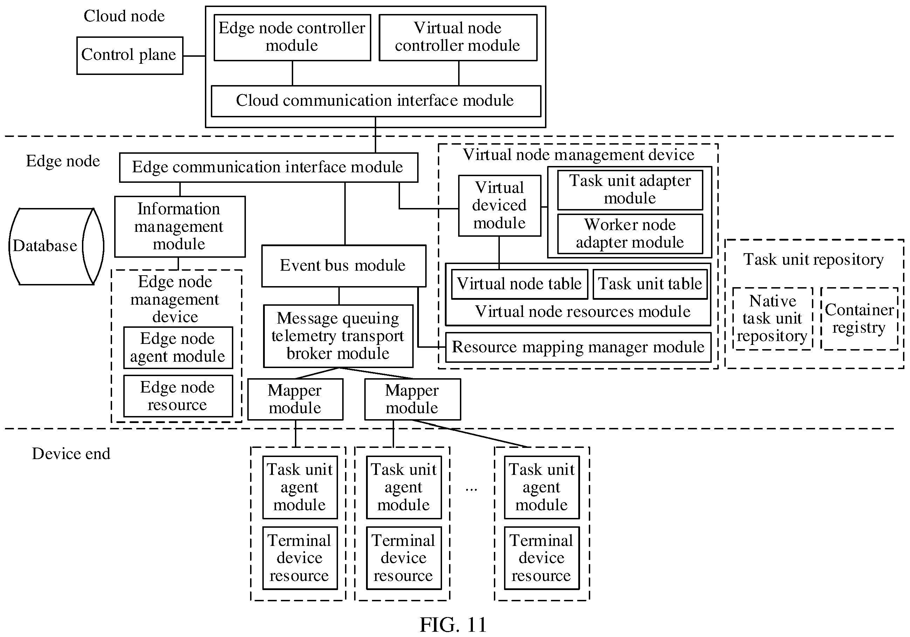

Based on Kubernetes and KubeEdge ecosystems, the following describes in detail an implementation of the computing node management method in this embodiment of this application with reference to FIG. 11.

As shown in FIG. 11, in this embodiment, the system controller module is implemented by a control plane of Kubernetes. In this embodiment, the scheduling unit is a pod in Kubernetes, and the scheduling unit descriptor is a Kubernetes pod descriptor. The Kubernetes pod descriptor is description information used to describe a pod resource in Kubernetes, for example, may include: an application programming interface version (represented by apiVersion in Kubernetes), a resource type (represented by kind in Kubernetes), and metadata (represented by metadata in Kubernetes), and an optional specification (represented by spec in Kubernetes) and status (represented by status in Kubernetes). The worker node descriptor is a Kubernetes node descriptor, where the node is a worker node in Kubernetes, and the Kubernetes node descriptor is description information used to describe a node resource in Kubernetes, for example, may include: an application programming interface version (represented by apiVersion in Kubernetes), a resource type (represented by kind in Kubernetes), metadata (represented by metadata in Kubernetes), and an optional specification (represented by spec in Kubernetes) and status (represented by status in Kubernetes). For details, refer to Kubernetes documents and source code. Details are not described herein again. In this embodiment, a control plane of Kubernetes is deployed on a cloud node.

In this embodiment, an edge node agent module in an edge node management device further needs to interconnect with a Kubernetes application programming interface server (which is also referred to as a Kubernetes API server) on the control plane of Kubernetes by using an edge network agent module and a cloud network agent module. The edge network agent module includes an edge communication interface module (which is also referred to as an EdgeHub module) and an information management module (which is also referred to as a MetaManager module) in KubeEdge, and the cloud network agent module includes a cloud communication interface module (which is also referred to as a CloudHub module) and an edge node controller module in KubeEdge. The edge node management device is in a conventional technology. For details, refer to documents and source code of a KubeEdge project. Details are not described herein again.

In this embodiment, a virtual node controller module needs to be newly added to a control device of KubeEdge on a cloud node, and is named as a VirtualNodeController module during implementation of this embodiment. The VirtualNodeController module connects to the CloudHub module through the KubeEdge communication framework. Therefore, an interface needs to be added to the CloudHub module to connect to the VirtualNodeController module. On the interface:

Messages sent by the VirtualNodeController module to the CloudHub module include: a Kubernetes pod creation request message, a Kubernetes pod deletion request message, and a Kubernetes node creation response message.

Messages received by the VirtualNodeController module from the CloudHub module include: a Kubernetes node creation request message, a Kubernetes node status update message, and a Kubernetes pod status update message.

In addition, the VirtualNodeController module is further connected to the Kubernetes API server by using a Kubernetes application programming interface (which is also referred to as a Kubernetes API). In this embodiment, the Kubernetes API that needs to be implemented includes an interface of a node resource and an interface of a pod resource. The two types of interfaces are existing interfaces defined by the Kubernetes API, and may be implemented based on the conventional technology. For example, refer to implementation of the EdgeController module of the KubeEdge project. Details are not described herein. After the two types of interfaces are implemented, the VirtualNodeController module supports the following functions: creating or updating a node to the Kubernetes API server, obtaining, from the Kubernetes API server, a pod descriptor of a pod to be created or deleted, and updating a node status or pod status to the Kubernetes API server.

In this embodiment, a virtual node management device is newly added on an edge node, and implementation of each module is as follows.

The task unit adapter module is named a TaskUnitAdapter module during implementation in this embodiment. The module converts, based on a task unit type parameter, the Kubernetes pod descriptor into a task unit descriptor corresponding to the task unit type. In one possible implementation, a program module is used for implementation, and a programming interface is provided and may be directly invoked or invoked by using a KubeEdge communication framework. In another possible implementation, a microservice is used for implementation and is invoked in a remote manner. This is not limited in this embodiment of this application.

The worker node adapter module is named a WorkerNodeAdapter module during implementation in this embodiment. The module converts a virtual node context in a virtual node table into a Kubernetes node descriptor. In one possible implementation, a program module is used for implementation, and a programming interface is provided and may be directly invoked or invoked by using a KubeEdge communication framework. In another possible implementation, a microservice is used for implementation and is invoked in a remote manner. This is not limited in this embodiment of this application.

The virtual deviced module is named a VirtualDeviced module during implementation in this embodiment, and is interconnected with the EdgeHub module by using the KubeEdge communication framework. Therefore, a new interface needs to be added to the EdgeHub module to interconnect with the VirtualDeviced module. On the interface:

Messages sent by the VirtualDeviced module to the EdgeHub module include: a Kubernetes node creation request message, a Kubernetes node status update message, and a Kubernetes pod status update message.

Messages received by the VirtualDeviced module from the EdgeHub module include: a Kubernetes pod creation request message, a Kubernetes pod deletion request message, and a Kubernetes node creation response message.

A task unit type selector module is named a TaskUnitTypeSelector module during implementation in this embodiment, and the module may select a task unit type on a virtual node based on a preset rule.

The virtual node resources module is named as a VirtualNodeResources module during implementation in this embodiment, and may be implemented in a manner of a database, or may be implemented in a manner of shared memory. This is not limited in this embodiment of this application.

The resource mapping manager module is named a ResourceMappingManager module during implementation in this embodiment. The module is connected to the message queuing telemetry transport broker module (which is also referred to as an MQTT broker module) through an event bus module (which is also referred to as an EventBus module) of KubeEdge. Therefore, an interface needs to be added to the EventBus module to interconnect with the ResourceMappingManager module. On the interface:

Messages sent by the ResourceMappingManager module to the EventBus module include: a task unit creation request message, a task unit deletion request message, and a resource registration response message.

Messages received by the ResourceMappingManager module from the EventBus module include: a resource registration request message, a resource status update message, and a task unit status update message.

Therefore, a topic (which is also referred to as Topic, and for details, refer to descriptions in KubeEdge) needs to be added to the EventBus module. For example, Table 2 is an example of an MQTT topic that needs to be added to an edge computing system and a usage of the MQTT topic.

**Table 2**

| Topic name | Purpose | Name example |
|---|---|---|
| topic 1 | Request message for resource registration | schedulableResource/events/register/request |
| topic2 | Response message for resource registration | schedulableResource/events/ { resourceId }/ register/response |
| topic3 | Message for status update | schedulableResource/events/statusUpdate |
| topic4 | Request message for task unit management | schedulableResource/events/ { resourceId }/ taskUnitManagement/request |

Table 1 lists message names and message parameters included in resource registration type, status update type, and task unit management type messages. {resourceId} needs to be replaced with a value of a resource identifier on the terminal device. In addition, for ease of implementation, the topic names in Table 2 may have a same public prefix that can be distinguished from other topics, for example, "schedulableResource/events".

In this embodiment, a new module needs to be added to the terminal device, and the task unit agent module is named a TaskUnitAgent module during implementation of this embodiment. The module subscribes to and obtains a message from the MQTT broker module, where the message includes a task unit creation request message, a task unit deletion request message, and a resource registration response message; or publishes a resource registration request message, a resource status update message, and a task unit status update message to the MQTT broker module.

In a possible manner, the TaskUnitAgent module interacts with the MQTT broker module. The possible manner includes: The TaskUnitAgent module is connected to a converter (referred to as a Mapper in this embodiment) module by using an existing transmission interface of the terminal device, for example, Bluetooth (Bluetooth), and interacts with the MQTT broker module by using the Mapper module. In another possible manner, the terminal device has an MQTT client function, and the TaskUnitAgent module directly interacts with the MQTT broker module by using an MQTT client.

Optionally, this embodiment may also include a task unit repository. For detailed descriptions, refer to the foregoing embodiments. Details are not described herein again.

A "resource registration procedure of the terminal device" in this embodiment is described in detail by using an example in which the TaskUnitAgent module is deployed on the terminal device, the terminal device is connected to the MQTT broker module by using the Mapper module or directly by using the MQTT client; and the EventBus module has subscribed to a topic1 of the MQTT broker module, and the TaskUnitAgent module has subscribed to a topic2 of the MQTT broker module.

Step 1: The TaskUnitAgent module sends a resource registration request message to the ResourceMappingManager module.

A possible implementation is as follows. The TaskUnitAgent module releases a resource registration request message to the topic1 of the MQTT broker module. The resource registration request message includes a resource identifier (which is also referred to as resourceId in this embodiment), a resource group (which is also referred to as resourceGroup in this embodiment), a task unit type list (which is also referred to as tuTypeList in this embodiment), total resource quantity information, allocatable resource information, and optional node system information (which is also referred to as nodeSystemInfo in this embodiment). The total resource quantity information includes a total CPU quantity (which is also referred to as cpuTotal in this embodiment), a total memory quantity (which is also referred to as memTotal in this embodiment), and a total storage quantity (which is also referred to as diskTotal in this embodiment). The allocatable resource information includes a quantity of allocatable CPUs (which is also referred to as cpuAllocatable in this embodiment), a quantity of allocatable memories (which is also referred to as memAllocatable in this embodiment), and a quantity of allocatable storage (which is also referred to as diskAllocatable in this embodiment). The node system information is defined by Kubernetes, including a machine identifier, a globally unique system identifier, a kernel version, a node architecture, and the like. For details, refer to a Kubernetes document or source code. A node system information parameter is a character string obtained after JavaScript object notation (JavaScript Object Notation, JSON) sequencing is performed on an object of the NodeSystemInfo type defined by Kubernetes. The EventBus module obtains an MQTT message from the MQTT broker module. If an MQTT topic matches a public prefix of the topic name in Table 2, the EventBus module sends the message to the ResourceMappingManager module through the KubeEdge communication framework. The message includes the MQTT topic and the MQTT message.

Step 2: The ResourceMappingManager module receives a message; if the MQTT topic matches a format of the topic1, the MQTT message is a resource registration request message, where a processing process of the resource registration request message is as follows: extracting a resource identifier resourceId, a resource group resourceGroup, a task unit type list tuTypeList, total resource quantity information (including cpuTotal, memTotal, and diskTotal), allocatable resource information (including cpuAllocatable, memAllocatable, and diskAllocatable), and optional system information nodeSystemInfo from the message; newly adding a virtual node context to a virtual node table (which is also referred to as VirtualNodeTable in this embodiment) in the VirtualNodeResources module; allocating an IP address (which is also referred to as nodeAddress in this embodiment) to a virtual node corresponding to the virtual node context; respectively assigning resourceId, resourceGroup, tuTypeList, nodeAddress, cpuTotal, memTotal, diskTotal cpuAllocatable, memAllocatable, and diskAllocatable fields to the following fields of the context: a virtual node identifier (which is referred to as vnId in this embodiment), a virtual node group (which is also referred to as vnGroup in this embodiment), a task unit type list (which is also referred to as a tuTypeList in this embodiment), an IP address of a virtual node (which is also referred to as vnAddress in this embodiment), cpuTotal, memTotal, diskTotal, cpuAllocatable, memAllocatable, and diskAllocatable; if a nodeSystemInfo parameter exists in the message and a parameter value is not null, assigning nodeSystemInfo to a nodeSystemInfo field in the context; or otherwise, a value of the nodeSystemInfo field in the context is null, setting a value of a vnStatus field in the context to a preset flag indicating that the virtual node is being created, for example, "creating", and setting a value of a transitionTime field to a current timestamp.

Step 3: The VirtualDeviced module detects that a virtual node context is newly added to the VirtualNodeTable of the VirtualNodeResources module, and reads the context.

Step 4: If the value of the vnStatus field in the virtual node context is a preset flag indicating that a virtual node is being created, for example, "creating", the VirtualDeviced module invokes the WorkerNodeAdapter module to convert the virtual node context into a Kubernetes node descriptor. In this embodiment, the following optional step may be further performed: The following key-value pairs are newly added to a labels field in a metadata field of the Kubernetes node descriptor: (1) A key is "node-type", and a value of the key is a character string "VirtualNode". 2) A key is "resource-group", and a value is a value of vnGroup in VirtualNodeTable. 3) A key is "edge-node-id", and a value of the key is a unique identifier of an edge node on which the virtual node management device is located. In a possible implementation, the edge node identifier is read from a configuration file of the VirtualDeviced module.

A label whose key is "node-type" is used to identify that the node is a virtual node. A label whose key is "resource-group" may be selected by a Kubernetes user to a set of virtual nodes that can be used for resource sharing. A label whose key is "edge-node-id" may be selected by a Kubernetes user to a set of virtual nodes that are mapped to a same edge node.

Step 5: The VirtualDeviced module sends a Kubernetes node descriptor to the system controller module, and registers a node corresponding to the Kubernetes node descriptor as a worker node.

A possible implementation is as follows: The VirtualDeviced generates a Kubernetes node creation request message, where the message includes a Kubernetes node descriptor, and sends the message to the EdgeHub module by using the KubeEdge communication framework, where message content includes the Kubernetes node creation request message, and a routing operation type of the message is "insert". The EdgeHub module sends the message to the CloudHub module. The CloudHub module sends the message to the VirtualNodeController module by using the KubeEdge communication framework. After the VirtualNodeController module receives the message, if the routing operation type of the message is "insert", and the message content includes the Kubernetes node creation request message, the VirtualNodeController module obtains the Kubernetes node descriptor from the Kubernetes node creation request message, and then invokes a node creation interface of the Kubernetes API, that is, a Create operation interface of a node resource, where a parameter includes the Kubernetes node descriptor, to register a worker node with the Kubernetes API server.

Optionally, after the terminal device is mapped to the worker node by using the virtual node management device, a "resource registration response procedure of the terminal device" may be further performed as follows.

Step 1: The VirtualNodeController module obtains a response result of invoking a Create operation interface of a node resource of a Kubernetes API, and generates a Kubernetes node creation response message, where the message includes a virtual node identifier and result information, the virtual node identifier may be obtained from a name field in a metadata field of a Kubernetes node descriptor, and the result information includes a flag indicating whether the Kubernetes node is successfully created, for example, success or failure, and an optional failure reason. The VirtualNodeController module sends a message to the VirtualDeviced module through the CloudHub and EdgeHub modules. The message content includes the Kubernetes node creation response message, and the routing operation type of the message is "response".

Step 2: The VirtualDeviced module receives the message; if the routing operation type of the message is "response", and the message content includes the Kubernetes node creation response message, the VirtualDeviced module obtains a virtual node identifier and result information from the Kubernetes node creation response message, and then updates the vnStatus field of the corresponding virtual node context in VirtualNodeTable in the VirtualNodeResources module; and if the creation succeeds, the value of the vnStatus field is set to a preset flag indicating that the virtual node is successfully created, for example, "created".

Step 3: The ResourceMappingManager module detects that a virtual node context in VirtualNodeTable of the VirtualNodeResources module is updated, reads the context, and if the value of the vnStatus field in the context is updated to the preset flag indicating that the virtual node is successfully created, for example, "created", generates a resource registration response message, where the message includes result information, where the result information includes a flag indicating whether the resource registration is successful, for example, success or failure, and an optional failure reason; and then the ResourceMappingManager module generates a KubeEdge communication framework message, where the message includes an MQTT topic and a resource registration response message, the MQTT topic is a topic2, and the topic2 includes a resource identifier (for example, a resource identifier variable {resourceId} shown in Table 2 is replaced with a virtual node identifier vnId in a virtual node context).

Step 4: The ResourceMappingManager module sends the message to the EventBus module by using the KubeEdge communication framework; the EventBus module publishes the resource registration response message in the message to the topic2 of the MQTT broker module; and if the TaskUnitAgent module has subscribed to the topic2 of the MQTT broker module, the TaskUnitAgent module receives the resource registration response message and obtains resource registration result information based on the message.

The following uses an example in which the TaskUnitAgent module is deployed on the terminal device. The terminal device is connected to the MQTT broker module by using the Mapper module or directly by using the MQTT client, and the TaskUnitAgent module has subscribed to a topic4 of the MQTT broker module. A "scheduling unit deployment procedure" in this embodiment is described. The part "Allocating the scheduling unit to an edge node" belongs to the conventional technology, and is not described in detail in this embodiment.

The VirtualNodeController module monitors a pod resource bound to each virtual node from the Kubernetes API server (for example, by invoking a Watch operation interface of the pod resource of the Kubernetes API). When detecting that a virtual node is bound to a pod resource, the VirtualNodeController module performs the following operations.

Step 1: The VirtualNodeController module sends a Kubernetes pod creation request message to the VirtualDeviced module.

A possible implementation is as follows: The VirtualNodeController module receives a Kubernetes pod descriptor of a pod resource bound to a virtual node, generates a Kubernetes pod creation request message, where the message includes the Kubernetes pod descriptor, and sends the message to the CloudHub module by using the KubeEdge communication framework, where message content includes the Kubernetes pod creation request message, and a routing operation type of the message is "insert". The CloudHub module sends the message to the EdgeHub module. The EdgeHub module sends the message to the VirtualDeviced module through the KubeEdge communication framework.

Step 2: After receiving the message, if the routing operation type of the message is "insert", and the message content includes the Kubernetes pod creation request message, the VirtualDeviced module obtains the Kubernetes pod descriptor from the Kubernetes pod creation request message. The VirtualDeviced module invokes a TaskUnitTypeSelector module, where a parameter includes the Kubernetes pod descriptor, to obtain a task unit type of the virtual node, and then invokes the TaskUnitAdapter module, where a parameter includes the Kubernetes pod descriptor and the task unit type, to obtain a task unit descriptor adapted to the virtual node.

Step 3: The VirtualDeviced module extracts a task unit name from the task unit descriptor, obtains, from a nodeName field of a spec field of the pod descriptor, a name of a worker node allocated to the pod, where the name of the worker node is a virtual node identifier corresponding to the worker node; and extracts values of name and namespace fields from the metadata field of the pod descriptor, and uses the values as a scheduling unit name and a scheduling unit namespace respectively. A task unit context is newly added to a task unit table (which is also referred to as TaskUnitTable in this embodiment) in VirtualNodeResources, and a task unit name, a task unit descriptor, a virtual node identifier, a scheduling unit name, and a scheduling unit namespace are respectively assigned to the following fields of the context: a task unit name (which is also referred to as tuName in this embodiment), a task unit descriptor (which is also referred to as tuDescriptor in this embodiment), a virtual node identifier (which is also referred to as vnId in this embodiment), a scheduling unit name (which is also referred to as suName in this embodiment), and a scheduling unit namespace (which is also referred to as suNamespace in this embodiment), a value of a task unit phase (which is also referred to as tuStatus in this embodiment) field of the context is set to null, a value of a task unit status (which is also referred to as tuStatus in this embodiment) field is set to a preset flag indicating that a task unit is being created, for example, "creating", and a value of the transitionTime field is set to a current timestamp.

Step 4: The ResourceMappingManager module detects that a context is newly added to TaskUnitTable of the VirtualNodeResources module, reads the context, and if the value of the tuStatus field of the context is a preset flag indicating that a task unit is being created, for example, "creating", generates a task unit creation request message, where the message includes a task unit descriptor; and then the ResourceMappingManager module generates a KubeEdge communication framework message, where the message includes an MQTT topic and a task unit creation request message, the MQTT topic is a topic4, and the topic4 includes a resource identifier (for example, a resource identifier variable {resourceId} shown in Table 2 is replaced with a virtual node identifier vnId in a task unit context).

Step 5: The ResourceMappingManager module sends the task unit creation request message to the TaskUnitAgent module, and the TaskUnitAgent module creates a task unit instance.

A possible implementation is as follows: The ResourceMappingManager module sends the message to the EventBus module by using the KubeEdge communication framework. The EventBus module publishes the task unit creation request message in the message to the topic4 of the MQTT broker module. If the TaskUnitAgent module has subscribed to the topic4 of the MQTT broker module, the TaskUnitAgent module receives the task unit creation request message and creates a task unit instance based on the message.

Optionally, this embodiment may further include a "scheduling unit deletion procedure", and an overall procedure thereof is similar to the "scheduling unit deployment procedure" in this embodiment. A difference is as follows.

The VirtualNodeController module monitors, from the Kubernetes API server (for example, by invoking a Watch operation interface of a pod resource of the Kubernetes API), that a virtual node deletes a pod resource, obtains a Kubernetes pod descriptor of the pod resource, generates a Kubernetes pod deletion request message, where the message includes the Kubernetes pod descriptor, and sends the message to the CloudHub module by using the KubeEdge communication framework, where message content includes the Kubernetes pod deletion request message, where a routing operation type of the message is "delete". The CloudHub module sends the message to the EdgeHub module. The EdgeHub module sends the message to the VirtualDeviced module through the KubeEdge communication framework.

After receiving the message, if the routing operation type of the message is "delete" and the message content includes the Kubernetes pod deletion request message, the VirtualDeviced module obtains the Kubernetes pod descriptor from the Kubernetes pod deletion request message, obtains a pod name and a pod namespace from the name and namespace fields of the metadata field of the pod descriptor, uses the pod name as the scheduling unit name, and uses the pod namespace as the scheduling unit namespace to search for a context corresponding to the TaskUnitTable in the VirtualNodeResources module, and sets a value of the tuStatus field in the context to a preset flag indicating that the task unit is being deleted, for example, "deleting". Optionally, the VirtualDeviced module sets a timer, and if the preset threshold is reached, the task unit context is deleted from the TaskUnitTable. The ResourceMappingManage module detects that a context in the TaskUnitTable of the VirtualNodeResources module is updated, and reads the context. If the value of the tuStatus field in the context is updated to a preset flag indicating that a task unit is being deleted, for example, "deleting", the ResourceMappingManage module generates a task unit deletion request message, where the message includes a task unit name. The ResourceMappingManager module then generates a KubeEdge communication framework message, where the message includes the MQTT topic and the task unit deletion request message, the MQTT topic is a topic4, and the topic4 includes a resource identifier (for example, a resource identifier variable {resourceId} shown in Table 2 is replaced with a virtual node identifier vnId in a task unit context).

The ResourceMappingManager module sends the message to the EventBus module by using the KubeEdge communication framework. The EventBus module publishes the task unit deletion request message in the message to the topic4 of the MQTT broker module. If the TaskUnitAgent module has subscribed to the topic4 of the MQTT broker module, the TaskUnitAgent module receives the task unit deletion request message, and terminates and deletes a locally running task unit instance based on the message.

In this embodiment, a scheduling unit adapter module is further included. In this embodiment, the module is named a SchedulingUnitAdapter module during implementation, and is configured to convert a task unit context into a Kubernetes pod descriptor.

In this embodiment, a "resource status update procedure" and a "task unit status update procedure" may be further included. Each procedure includes two phases, which are triggered by an independent time period or event. In an example, an implementation is described as follows (where the EventBus module has subscribed to the topic3 of the MQTT broker module).

### Phase 1

After the TaskUnitAgent module processes the resource registration response message, a preset event may further trigger the TaskUnitAgent module to send the resource status update message. Examples of trigger events are as follows: A preset time period arrives, a resource status changes (for example, a resource is ready or unavailable), and a hardware fault occurs.

After the TaskUnitAgent module processes the task unit creation request message or the task unit deletion request message, the preset event may further trigger the TaskUnitAgent module to send the task unit status update message. Examples of trigger events are as follows: The task unit starts to run, the task unit stops running, or the task unit fails to run.

Step 1: The TaskUnitAgent module releases a status update message to the topic3 of the MQTT broker module; if the message is a resource status update message, the message includes a resource identifier (which is also referred to as resourceId in this embodiment), total resource quantity information, allocatable resource information, and a resource status (which is also referred to as resourceStatus in this embodiment), where the total resource quantity information includes a total CPU quantity (which is also referred to as cpuTotal in this embodiment), a total memory quantity (which is also referred to as memTotal in this embodiment), and a total storage quantity (which is also referred to as diskTotal in this embodiment), where the allocatable resource information includes a quantity of allocatable CPUs (which is also referred to as cpuAllocatable in this embodiment), a quantity of allocatable memories (which is also referred to as memAllocatable in this embodiment), and a quantity of allocatable storage (which is also referred to as diskAllocatable in this embodiment), where if the resource is ready, a value of the resourceStatus field is set to a preset flag indicating that the resource is ready, for example, "ready"; and if the message is an update message, the message includes a task unit name (which is also referred to as tuName in this embodiment), a task unit phase (which is also referred to as tuPhase in this embodiment), and a task unit status (which is also referred to as tuStatus in this embodiment), where for a value of the tuPhase field, refer to a definition of PodPhase in Kubernetes technical specifications, and an example is as follows: if the task unit has been accepted by the TaskUnitAgent, tuPhase is set to "Pending"; if all execution entities included in the task unit have started to run, tuPhase is set to "Running", where if the task unit is ready, a value of the tuStatus field is set to a preset flag indicating that the task is ready, for example, "ready"; and then the EventBus module obtains an MQTT message from the MQTT broker module, and if the MQTT topic matches a public prefix of a topic name in Table 2, sends the message to the ResourceMappingManager module by using the KubeEdge communication framework, where the message includes the MQTT topic and the MQTT message.

Step 2: The ResourceMappingManager module receives the message, where if the MQTT topic matches a format of the topic3, the MQTT message is a status update message; if the message is a resource status update message, extracts a resource identifier resourceId, total resource quantity information (including cpuTotal, memTotal, and diskTotal), allocatable resource information (including cpuAllocatable, memAllocatable, and diskAllocatable), and a resource status resourceStatus from the message, in VirtualNodeTable of the VirtualNodeResources module, uses resourceId as vnId to search for a virtual node context corresponding to the resource, compares cpuTotal, memTotal, diskTotal, cpuAllocatable, memAllocatable, diskAllocatable, and resourceStatus fields with values of cpuTotal, memTotal, diskTotal, cpuAllocatable, memAllocatable, diskAllocatable, and resourceStatus fields of the context and obtains a comparison result of each field, and updates the cpuTotal, memTotal, diskTotal, cpuAllocatable, memAllocatable, diskAllocatable, and resourceStatus fields to the cpuTotal, memTotal, diskTotal, cpuAllocatable, memAllocatable, diskAllocatable, and resourceStatus fields of the context, and sets a value of a heartbeatTime field of the context to a current timestamp, where if a value of at least one field in the field comparison result changes, a value of a transitionTime field in the context is set to the current timestamp; if the message is a task unit status update message, obtains a task unit name tuName, a task unit phase tuPhase, and a task unit status tuStatus from the message, searches the TaskUnitTable in the VirtualNodeResources module for a task unit context corresponding to tuName, compares the tuPhase and tuStatus fields with values of tuPhase and tuStatus fields in the context, and obtains a comparison result of each field, updates the tuPhase and tuStatus fields to the tuPhase and tuStatus fields of the context respectively, and sets a value of the heartbeatTime field of the context is set to the current timestamp, where if the value of at least one field in the field comparison result changes, the value of the transitionTime field of the context is set to the current timestamp.

### Phase 2

The VirtualDeviced module may further be triggered, by a preset event, to send the Kubernetes node status update message. An example of a trigger event is as follows: A preset time period arrives, and a virtual node context in VirtualNodeTable is updated.

The VirtualDeviced module may further be triggered, by a preset event, to send the Kubernetes pod status update message. The following is an example of a trigger event: A task unit context in TaskUnitTable is updated.

Step 1: If a preset time period of a virtual node context in VirtualNodeTable arrives or a virtual node context is updated, the VirtualDeviced module reads the context, invokes the WorkerNodeAdapter module to convert the virtual node context into a Kubernetes node descriptor, and then generates a Kubernetes node status update message, where the message includes a node name and a Kubernetes node descriptor, and the node name is a virtual node identifier vnId in the virtual node context, and sends the message to the EdgeHub module by using the KubeEdge communication framework, where message content includes the Kubernetes node status update message, and a routing operation type of the message is "update"; and if a task unit context in the TaskUnitTable is updated, the VirtualDeviced module reads the context, invokes the SchedulingUnitAdapter module to convert the task unit context into a Kubernetes pod descriptor, and then generates a Kubernetes pod status update message, where the message includes a pod namespace, a pod name, and a Kubernetes pod descriptor, and the pod namespace and the pod name are the scheduling unit namespace suNamespace and the scheduling unit name suName in the task unit context respectively, and sends the message to the EdgeHub module by using the KubeEdge communication framework, where message content includes the Kubernetes pod status update message, and a routing operation type of the message is "update".

Step 2: The EdgeHub module sends the message to the VirtualNodeController module through the CloudHub module.

Step 3: After receiving the message, if the routing operation type of the message is "update", and the message content includes the Kubernetes node status update message, the VirtualNodeController module obtains a node name and a Kubernetes node descriptor from the Kubernetes node status update message, and then invokes a node status update interface of the Kubernetes API, for example, a Replace Status operation interface of a node resource, where parameters include the node name and the Kubernetes node descriptor, to update a node status to the Kubernetes API server; if the routing operation type of the message is "update", and the message content includes the Kubernetes pod status update message, the VirtualNodeController module obtains the pod namespace, the pod name, and the Kubernetes pod descriptor from the Kubernetes pod status update message, and then invokes a pod status update interface of the Kubernetes API, for example, a Replace Status operation interface of a pod resource, where parameters include the pod namespace, the pod name, and the Kubernetes pod descriptor, to update a pod status to the Kubernetes API server.

In this embodiment, the KubeEdge communication framework is a software framework for communication between modules in the KubeEdge project, for example, a "beehive" framework in the current KubeEdge project. For details, refer to related technical descriptions. Details are not described herein again.

In this embodiment, a virtual node controller and a virtual node management device are newly added to KubeEdge, a task unit agent module is newly added to the terminal device, interfaces are newly added to the EdgeHub module and the EventBus module of KubeEdge to interconnect with the virtual node management device, and interfaces are newly added to the CloudHub module of KubeEdge to interconnect with the virtual node controller. In this way, heterogeneous terminal devices can be uniformly registered as worker nodes of Kubernetes, so that a scheduler of Kubernetes can deploy computing tasks to the heterogeneous terminal devices, thereby implementing joint scheduling of edge nodes and terminal devices in an edge computing environment.

In addition, because the virtual node is used as an intermediary, the control device and the virtual node management device may separately maintain statuses of the worker node and the virtual node. For example, when the terminal device is temporarily disconnected from a network, a connection between the virtual node in the virtual node management device and the control device is normal. In this way, unnecessary re-scheduling by the control device caused by temporary network disconnection of the terminal device is avoided.

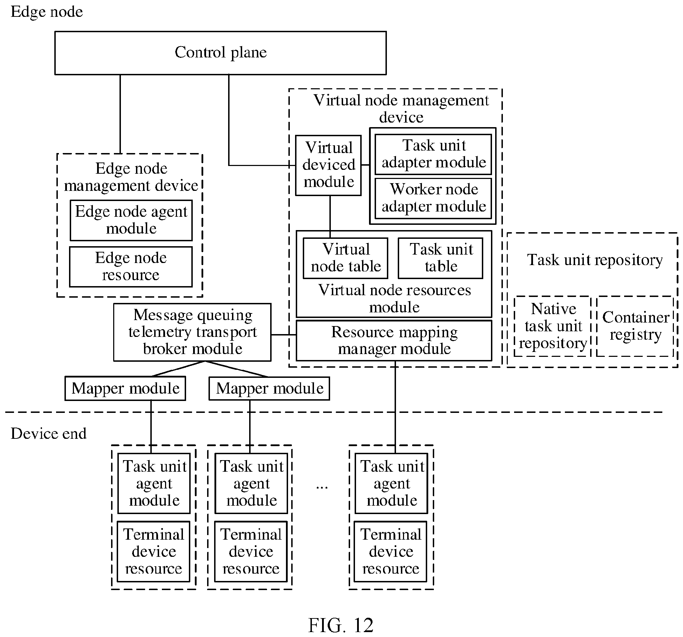

Based on a Kubernetes ecosystem, the following describes in detail an implementation of the computing node management method in another embodiment of this application with reference to FIG. 12.

In this embodiment, compared with the embodiment based on Kubernetes and KubeEdge in FIG. 11, the same is that the system controller modules are all implemented by the control plane of Kubernetes. Therefore, the scheduling unit in this embodiment is also a pod in Kubernetes, the scheduling unit descriptor is a Kubernetes pod descriptor, and the worker node descriptor is a Kubernetes node descriptor. A difference is that the control plane of Kubernetes in this embodiment is deployed on an edge node.

As shown in FIG. 12, in this embodiment, the edge node management device belongs to the conventional technology. For details, refer to a document and source code of Kubernetes. Details are not described herein again.

In this embodiment, a virtual node management device needs to be deployed on an edge node. The virtual node management device also includes: a task unit adapter module, a worker node adapter module, a virtual deviced module, a virtual node resources module, and a resource mapping manager module. The task unit adapter module, the worker node adapter module, and the virtual node resources module are completely the same as those in the embodiment shown in FIG. 11. For detailed descriptions thereof, refer to the description of the embodiment shown in FIG. 11. Details are not described herein again. The difference from Embodiment 1 is as follows.

The virtual deviced module is also referred to as a VirtualDeviced module in this embodiment, is connected to the Kubernetes API server by using a Kubernetes API. In this embodiment, the Kubernetes API that needs to be implemented includes an interface of a node resource and an interface of a pod resource. The two types of interfaces are existing interfaces defined by the Kubernetes API, and may be implemented based on the conventional technology. For example, refer to implementation of the EdgeController module of the KubeEdge project. Details are not described herein. After the two types of interfaces are implemented, the VirtualNodeController module supports the following functions: creating or updating a node to the Kubernetes API server, obtaining, from the Kubernetes API server, a pod descriptor of a pod to be created or deleted, and updating a node status or pod status to the Kubernetes API server.

The resource mapping manager module is also referred to as a ResourceMappingManager module in this embodiment. In this embodiment, the task unit agent module is connected in the following manners.

Manner a: The ResourceMappingManager module is connected to the MQTT broker module, and is connected to the task unit agent module in an MQTT mode.

Manner b: The ResourceMappingManager module directly provides an interface, and the task unit agent module is directly connected to the ResourceMappingManager module. One interface implementation is to use an interface based on a representational state transfer (representational state transfer, REST) style of a hypertext transfer protocol (hypertext transfer protocol, HTTP).

Manner c: The ResourceMappingManager module sends a notification message to a message push server of the terminal device, and is connected to the task unit agent module by using the message push service of the terminal device.

In this embodiment, a module needs to be added to the terminal device needs, the task unit agent module may also be referred to as a TaskUnitAgent module during implementation. By using an existing transmission interface and transmission protocol of the terminal device, the resource mapping manager module is connected in the following manners.

Manner a: The TaskUnitAgent module is connected to the MQTT broker module, and is connected to the ResourceMappingManager module in an MQTT manner. Implementation of the task unit agent in this manner is completely the same as that in the embodiment shown in FIG. 11, and details are not described again.

Method b: The TaskUnitAgent module is directly connected to an interface provided by the ResourceMappingManager module.

Manner c: The TaskUnitAgent module receives a message from the ResourceMappingManager module by using a message push service of the terminal device.

The following uses an example in which the TaskUnitAgent module is deployed on the terminal device to describe in detail a "resource registration procedure of the terminal device" in the embodiment shown in FIG. 12.

Step 1: The TaskUnitAgent module sends a resource registration request message to the ResourceMappingManager module.

In this embodiment, a possible implementation is as follows: The ResourceMappingManager module has subscribed to the topic1 of the MQTT broker module, and the TaskUnitAgent module releases a resource registration request message to the topic1 of the MQTT broker module. The ResourceMappingManager module obtains the message from the topic1 of the MQTT broker module.

Another possible implementation is as follows: The TaskUnitAgent module releases a resource registration request message to the ResourceMappingManager module by using an HTTP client.

In the foregoing implementation, the resource registration request message includes a resource identifier, a resource group, a task unit type list, total resource quantity information, allocatable resource information, and optional node system information. For detailed descriptions, refer to the descriptions in the embodiment shown in FIG. 11.

Step 2: The ResourceMappingManager module receives the resource registration request message, and a processing process of the message is the same as a processing process of the resource registration request message in step 2 in the "resource registration procedure of the terminal device" in the embodiment shown in FIG. 11.

Step 3: The VirtualDeviced module detects that a context is newly added to the VirtualNodeTable of the VirtualNodeResources module, and reads the context.

Step 4: After the VirtualDeviced module reads the context, a processing process is the same as step 4 in the "resource registration procedure of the terminal device" in the embodiment shown in FIG. 11. After this step is performed, the virtual node context is converted into a Kubernetes node descriptor.

Step 5: The VirtualDeviced module sends a Kubernetes node descriptor to the system controller module, and registers a node corresponding to the Kubernetes node descriptor as a worker node.

In a possible implementation, the VirtualDeviced module invokes a node creation interface of the Kubernetes API, that is, a Create operation interface of a node resource, where a parameter includes the Kubernetes node descriptor, and registers a worker node with the Kubernetes API server.

Optionally, after the terminal device is mapped to the worker node by using the virtual node management device, a "resource registration response procedure of the terminal device" may be further performed as follows.

Step 1: The VirtualDeviced module obtains result information of invoking the Create operation interface of the node resource of the Kubernetes API, and obtains a virtual node identifier from a name field in a metadata field of the Kubernetes node descriptor; and the VirtualDeviced module updates, based on the virtual node identifier and the result information, a vnStatus field of a corresponding virtual node context in VirtualNodeTable in the VirtualNodeResources module, and if the creation succeeds, sets a value of the vnStatus field to a preset flag indicating that the virtual node is successfully created, for example, "created".

Step 2: The ResourceMappingManager module detects that a virtual node context in VirtualNodeTable of the VirtualNodeResources module is updated, reads the context, and if the value of the vnStatus field in the context is updated to the preset flag indicating that the virtual node is successfully created, for example, "created", generates a resource registration response message, where the message includes result information, where the result information includes a flag indicating whether the resource registration is successful, for example, success or failure, and an optional failure reason.

Step 3: The ResourceMappingManager module sends a resource registration response message to the TaskUnitAgent module, and the TaskUnitAgent module obtains resource registration result information based on the message.

In this embodiment, a possible implementation is as follows: The ResourceMappingManager module releases a resource registration response message to a topic2 of the MQTT broker module, where the topic2 includes a resource identifier (for example, a resource identifier variable {resourceId} shown in Table 2 is replaced with a virtual node identifier vnId in a virtual node context). The TaskUnitAgent module has subscribed to the topic2 of the MQTT broker module, obtains the message, and then obtains resource registration result information based on the message.

In another possible implementation, the ResourceMappingManager finds an HTTP connection of a corresponding TaskUnitAgent based on the virtual node identifier by using an HTTP persistent connection, and sends a resource registration response message to the TaskUnitAgent module by using the HTTP connection. The TaskUnitAgent module obtains the message, and then obtains resource registration result information based on the message.

In another possible implementation, the ResourceMappingManager sends a resource registration response message to the message push server by using the message push service of the terminal device. For specific implementation, refer to a technical document of the message push service of the terminal device. Details are not described again. The TaskUnitAgent module obtains the message, and then obtains resource registration result information based on the message. The following describes in detail the "scheduling unit deployment procedure" in this embodiment. The part "Allocating the scheduling unit to an edge node" belongs to the conventional technology, and is not described in detail in this embodiment.

The VirtualDeviced module monitors a pod resource bound to each virtual node from the Kubernetes API server (for example, by invoking a Watch operation interface of the pod resource of the Kubernetes API). When detecting that a virtual node is bound to a pod resource, the VirtualNodeController module performs the following operations.

Step 1: The VirtualDeviced module receives a Kubernetes pod descriptor of a pod resource bound to a virtual node; and the VirtualDeviced module invokes a TaskUnitTypeSelector module, where a parameter includes the Kubernetes pod descriptor, to obtain a task unit type of the virtual node, and then invokes a TaskUnitAdapter module, where a parameter includes the Kubernetes pod descriptor and the task unit type, to obtain a task unit descriptor adapted to the virtual node.

Step 2: After the VirtualDeviced module obtains the task unit descriptor, a processing process is the same as step 3 in the "scheduling unit deployment procedure" in the embodiment shown in FIG. 11. Details are not described herein again.

Step 3: The ResourceMappingManager module detects that a context is newly added to TaskUnitTable of the VirtualNodeResources module, reads the context, and if the value of the tuStatus field of the context is a preset flag indicating that a task unit is being created, for example, "creating", generates a task unit creation request message, where the message includes a task unit descriptor.

Step 4: The ResourceMappingManager module sends the task unit creation request message to the TaskUnitAgent module, and the TaskUnitAgent module creates a task unit instance.

In this embodiment, a possible implementation is as follows: The ResourceMappingManager module publishes a task unit creation request message to a topic4 of the MQTT broker module, where the topic4 includes a resource identifier (for example, a resource identifier variable {resourceId} shown in Table 2 is replaced with a virtual node identifier vnId in the task unit context); and the TaskUnitAgent module has subscribed to the topic 4 of the MQTT broker module, receives the task unit creation request message, and creates a task unit instance based on the message.

In another possible implementation, the ResourceMappingManager finds an HTTP connection of a corresponding TaskUnitAgent based on the virtual node identifier by using an HTTP persistent connection, and sends a task unit creation request message to the TaskUnitAgent module by using the HTTP connection. The TaskUnitAgent module obtains the task unit creation request message, and creates a task unit instance based on the message.

In another possible implementation, the ResourceMappingManager sends a task unit creation request message to the message push server by using the message push service of the terminal device. For specific implementation, refer to a technical document of the message push service of the terminal device. Details are not described herein again. The TaskUnitAgent module obtains the task unit creation request message, and creates a task unit instance based on the message.

Optionally, a "scheduling unit deletion procedure" may further be included, and in this embodiment, an overall procedure thereof is similar to the "scheduling unit deployment procedure" in this embodiment. A difference is as follows.

The VirtualDeviced module monitors, from the Kubernetes API server (for example, by invoking a Watch operation interface of the pod resource of the Kubernetes API), that a virtual node deletes a pod resource, obtains a Kubernetes pod descriptor of the pod resource, obtains a pod name and a pod namespace from name and namespace fields of the metadata field of the pod descriptor, uses the pod name as the scheduling unit name and the pod namespace as the scheduling unit namespace, searches for a context corresponding to the TaskUnitTable in the VirtualNodeResources module, and sets a value of the tuStatus field in the context to a preset flag indicating that a task unit is being deleted, for example, "deleting". The ResourceMappingManager module detects that a context in TaskUnitTable of the VirtualNodeResources module is updated, and reads the context. If a value of the tuStatus field in the context is updated to a preset flag indicating that a task unit is being deleted, for example, "deleting", the ResourceMappingManager module generates a task unit deletion request message, where the message includes a task unit name.

The ResourceMappingManager module releases a message to the MQTT broker module. If the TaskUnitAgent module has subscribed to the topic4 of the MQTT broker module, the TaskUnitAgent module receives the task unit deletion request message, and terminates and deletes a locally running task unit instance. Alternatively, the TaskUnitAgent module obtains the task unit deletion request message from the ResourceMappingManager module through the HTTP persistent connection, terminates and deletes a locally running task unit instance. Alternatively, by using a message push service of the terminal device, the TaskUnitAgent module obtains the task unit deletion request message, and terminates and deletes a locally running task unit instance. This is not limited in this embodiment of this application.

In this embodiment, a scheduling unit adapter module is further included. In this embodiment, the module is also referred to as a SchedulingUnitAdapter module during implementation, and is configured to convert a task unit context into a Kubernetes pod descriptor.

In this embodiment, a "resource status update procedure" and a "task unit status update procedure" may be further included. Each procedure includes two phases, which are triggered by an independent time period or event. In an example, an implementation is described as follows.

### Phase 1

After the TaskUnitAgent module processes the resource registration response message, a preset event may further trigger the TaskUnitAgent module to send the resource status update message. Examples of trigger events are as follows: A preset time period is reached, a resource status changes (for example, a resource is ready or unavailable), and a hardware fault occurs.

After the TaskUnitAgent module processes the task unit creation request message or the task unit deletion request message, the preset event may further trigger the TaskUnitAgent module to send the task unit status update message. Examples of trigger events are as follows: The task unit starts to run, the task unit stops running, or the task unit fails to run.

Step 1: The TaskUnitAgent module releases a status update message to the topic3 of the MQTT broker module; the ResourceMappingManager module obtains the message from the MQTT broker module (where in this manner, the ResourceMappingManager has subscribed to the topic3 of the MQTT broker module); or the TaskUnitAgent module releases a status update message to the ResourceMappingManager module through an HTTP client; if the message is a resource status update message, the message includes a resource identifier (which is also referred to as resourceId in this embodiment), total resource quantity information, allocatable resource information, and a resource status (which is also referred to as resourceStatus in this embodiment), where the total resource quantity information includes a total CPU quantity (which is also referred to as cpuTotal in this embodiment), a total memory quantity (which is also referred to as memTotal in this embodiment), and a total storage quantity (which is also referred to as diskTotal in this embodiment), where the allocatable resource information includes a quantity of allocatable CPUs (which is also referred to as cpuAllocatable in this embodiment), a quantity of allocatable memories (which is also referred to as memAllocatable in this embodiment), and a quantity of allocatable storage (which is also referred to as diskAllocatable in this embodiment), where if the resource is ready, a value of the resourceStatus field is set to a preset flag indicating that the resource is ready, for example, "ready"; and if the message is an update message, the message includes a task unit name (which is also referred to as tuName in this embodiment), a task unit phase (which is also referred to as tuPhase in this embodiment), and a task unit status (which is also referred to as tuStatus in this embodiment), where for a value of the tuPhase field, refer to a definition of PodPhase in Kubernetes technical specifications, and an example is as follows: if the task unit has been accepted by the TaskUnitAgent, tuPhase is set to "Pending"; if all execution entities included in the task unit have started to run, tuPhase is set to "Running", where if the task unit is ready, a value of the tuStatus field is set to a preset flag indicating that the task is ready, for example, "ready".

Step 2: The ResourceMappingManager module receives the status update message, and a processing process is the same as step 2 in the "resource status update procedure" and the "task unit status update procedure" in the embodiment shown in FIG. 11.

### Phase 2

The VirtualDeviced module may further be triggered, by a preset event, to invoke a node status update interface of the Kubernetes API. An example of a trigger event is as follows: A preset time period arrives, and a virtual node context in VirtualNodeTable is updated.

The VirtualDeviced module may further be triggered, by a preset event, to invoke a pod status update interface of the Kubernetes API. The following is an example of a trigger event: A task unit context in TaskUnitTable is updated.

Step 1: If a preset time period of a virtual node context in VirtualNodeTable arrives or a virtual node context is updated, the VirtualDeviced module reads the context, invokes the WorkerNodeAdapter module to convert the virtual node context into a Kubernetes node descriptor, invokes the node status update interface of the Kubernetes API, for example, a Replace Status operation interface of the node resource, where parameters include a node name and a Kubernetes node descriptor, and the node name is a virtual node identifier vnId in the virtual node context, and updates the node status to the Kubernetes API server; if a task unit context in TaskUnitTable is updated, the VirtualDeviced module reads the context, invokes the SchedulingUnitAdapter module to convert the task unit context into a Kubernetes pod descriptor, and invokes the pod status update interface of the Kubernetes API, for example, the Replace Status operation interface of the pod resource, where parameters include a pod namespace, a pod name, and a Kubernetes pod descriptor, and the pod namespace and the pod name are the scheduling unit namespace suNamespace and the scheduling unit name suName in the task unit context respectively, and updates the pod status to the Kubernetes API server.

A difference between this embodiment and the embodiment shown in FIG. 11 lies in that the virtual node management device in this embodiment is interconnected to different open source software platforms, so that the virtual deviced module and the resource mapping manager module in the virtual node management device need to support and implement different interfaces and message processing procedures.

According to the computing node management system and the computing node management method provided in this embodiment, a virtual node management device and a task unit agent module are newly added, so that a terminal device can be mapped to a virtual node on an edge node, and a Kubernetes scheduler can deploy a computing task on a heterogeneous terminal device, thereby implementing joint scheduling of the edge node and the terminal device in an edge computing environment.

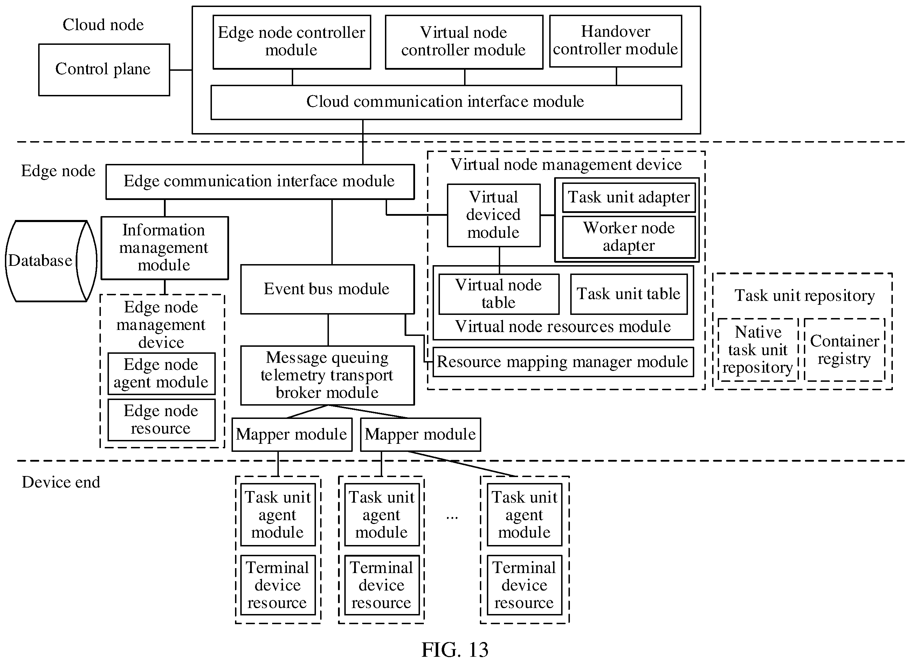

Based on Kubernetes and KubeEdge ecosystems, the following describes in detail another implementation of the computing node management method in this embodiment of this application with reference to FIG. 13.

In this embodiment, the system controller module is still implemented by the control plane of Kubernetes. Therefore, the scheduling unit in this embodiment is also a pod in Kubernetes, the scheduling unit descriptor is a Kubernetes pod descriptor, and the worker node descriptor is a Kubernetes node descriptor.

As shown in FIG. 13, in this embodiment, the edge node management device belongs to the conventional technology. For details, refer to a document and source code of Kubernetes. Details are not described herein again. Compared with the embodiment shown in FIG. 11, the same is that the system controller modules are all implemented by the control plane of Kubernetes, and the virtual node management device includes a task unit adapter module, a worker node adapter module, a virtual deviced module, a virtual node resources module, and a resource mapping manager module. The task unit adapter module and the virtual node resources module are completely the same as those in the embodiment shown in FIG. 11. For detailed descriptions thereof, refer to the description of the embodiment shown in FIG. 11. Details are not described herein again. Differences from the embodiment shown in FIG. 11 are as follows.

When the virtual deviced module (which is also referred to as a VirtualDeviced module in this embodiment) invokes the worker node adapter module to convert the virtual node context into a Kubernetes node descriptor, a label whose key is "edge-node-id" needs to be set in a metadata field in a labels field of the Kubernetes node descriptor. A label value is a unique identifier of an edge node on which the virtual node management device is located. A possible implementation method is to read the edge node identifier from a configuration file of the VirtualDeviced module.

A virtual node controller module (which is referred to as a VirtualNodeController module in this embodiment) further needs to maintain a table of "a correspondence between a virtual node identifier and an edge node identifier" based on a function of the embodiment shown in FIG. 11. The table is used to determine whether a terminal device in which a schedulable resource is located is handed over, causing repeated registration of a Kubernetes worker node. Based on implementation of the WorkerNodeAdapter module, a Kubernetes node name is a virtual node identifier, and a label value whose key is "edge-node-id" in a Kubernetes node label is an edge node identifier of an edge node on which the virtual node is located.

The table of "a correspondence between a virtual node identifier and an edge node identifier" may be implemented by using a database, or may be implemented by using shared memory, so that the table can be accessed by a handover controller module. A specific implementation is not limited in this embodiment of this application.

In this embodiment, the handover controller module is newly added. In this embodiment, the handover controller module is named a HandoverController module during implementation, and is configured to migrate, when the terminal device is handed over, all task unit contexts corresponding to the virtual node in the virtual node resources module on a source edge node to a target edge node. Therefore, a new interface needs to be added to the CloudHub module to interconnect with the HandoverController module. On the interface:

Messages sent by the HandoverController module to the CloudHub module include a virtual node out-migration request message and a virtual node in-migration request message.

Messages received by the HandoverController module from the CloudHub module include a virtual node migrate-out response message and a virtual node migrate-in response message.

The following uses an example in which the first device is a terminal device to describe a computing node management method in this embodiment when the terminal device is handed over from one edge node to another edge node. A possible implementation is as follows.

Step 1: The VirtualNodeController module receives a Kubernetes node creation request message, where the message includes a Kubernetes node descriptor, uses a value of a name field in a metadata field in the Kubernetes node descriptor as a value of a virtual node identifier vnId, and uses a label value whose key is "edge-node-id" in a labels field in the metadata field as an edge node identifier (which is also referred to as edgeNodeId in this embodiment); and searches for the table of "a correspondence between a virtual node identifier and an edge node identifier" based on vnId and edgeNodeId, if an entry with same vnId but different edgeNodeId is found in the table, it is considered that a terminal device in which a resource corresponding to the virtual node is located is handed over, and in this case, edgeNodeId in the table "a correspondence between a virtual node identifier and an edge node identifier" is used as a source edge node identifier (which is also referred to as sourceEdgeNodeId in this embodiment), and edgeNodeId in the Kubernetes node creation request message is used as a target edge node identifier (which is also referred to as targetEdgeNodeId in this embodiment).

Step 2: If the terminal device is handed over, the VirtualNodeController module sends a handover notification message to the HandoverController module by using the KubeEdge communication framework, where the message includes vnId, sourceEdgeNodeId, and targetEdgeNodeId.

Step 3: The HandoverController module sends a virtual node migrate-out request message to a VirtualDeviced module (which is also referred to as a Source VirtualDeviced module in this embodiment) of the source edge node through the CloudHub module and the EdgeHub module, where the message includes vnId.

Step 4: The Source VirtualDeviced module receives the virtual node migration-out request message, searches for a virtual node context corresponding to the vnId in the VirtualNodeTable in the VirtualNodeResources module, sets a vnStatus field of the context corresponding to the vnId in VirtualNodeTable to a preset flag indicating that the virtual node has been migrated, for example, "migrated", and reads all task unit contexts corresponding to the vnId in the TaskUnitTable; and optionally, the Source VirtualDeviced module sets a timer, and if a preset threshold is reached, deletes, from the VirtualNodeTable, a virtual node context corresponding to the vnId, and deletes, from the TaskUnitTable, all task unit contexts corresponding to the vnId.

Step 5: The Source VirtualDeviced module sends a virtual node out-migration response message to the HandoverController module through the EdgeHub module and the CloudHub module, where the message includes all task unit contexts corresponding to the virtual node.

Step 6: The HandoverController module receives the virtual node out-migration response message, and sends a virtual node in-migration request message to a VirtualDeviced module (which is referred to as a Target VirtualDeviced module) on the target edge node through the CloudHub module and the EdgeHub module, where the message includes all task unit contexts corresponding to the virtual node.

Step 7: The Target VirtualDeviced module receives the virtual node in-migration request message, and updates all task unit contexts that correspond to the virtual node and that are included in the message to a TaskUnitTable in a VirtualNodeResources module of the target edge node.

Step 8: The Target VirtualDeviced module sends a virtual node in-migration response message to the HandoverController module through the EdgeHub module and the CloudHub module, where the message includes a response result.

Step 9: The HandoverController module receives the virtual node in-migration response message, where the response result indicates that the migration is successful, and sends a handover acknowledgment message to the VirtualNodeController module by using the KubeEdge communication framework, where the message includes an acknowledgment result.

Step 10: The VirtualNodeController module receives the handover acknowledgment message, invokes the node status update interface of the Kubernetes API, for example, the Replace Status operation interface of the node resource, where parameters include a node name and a Kubernetes node descriptor, and the node name is a value of a name field in the metadata field in the Kubernetes node descriptor, and requests the Kubernetes API server to update a worker node status.

Step 11: The VirtualNodeController modifies an edge node identifier corresponding to the virtual node identifier vnId in the table "a correspondence between a virtual node identifier and an edge node identifier" to a target edge node identifier targetEdgeNodeId.

Optionally, after completing updating the worker node status, the VirtualNodeController obtains a response result of invoking the Replace Status operation interface of the node resource of the Kubernetes API, and sends a Kubernetes node creation response message to the VirtualDeviced module through the CloudHub module and the EdgeHub module. The message includes a virtual node identifier and result information, and the result information includes a flag indicating whether a Kubernetes node status is successfully updated, for example, success or failure, and an optional failure reason.

In this embodiment, the KubeEdge communication framework is a software framework for communication between modules in the KubeEdge project, for example, a "beehive" framework in a current KubeEdge project. For details, refer to related technical descriptions. Details are not described herein again.

In this embodiment, a virtual node controller, a handover controller module, a virtual node management device, and a task unit agent module are newly added to KubeEdge, interfaces are newly added to the EdgeHub module and the EventBus module of KubeEdge to interconnect with the virtual node management device, and two interfaces are newly added to the CloudHub module of KubeEdge to respectively interconnect with the virtual node controller module and the handover controller module. In addition, in terms of a message procedure, a handover notification message, a virtual node out-migration request message, a virtual node out-migration response message, a virtual node in-migration request message, a virtual node in-migration response message, and a handover acknowledgment message are added, so that when the terminal device performs resource registration again after being handed over to the target edge node, the virtual node controller module may detect a repeated resource registration message, and notify a handover controller to migrate all task unit contexts corresponding to the virtual node from the source edge node to the target edge node, and change an original operation of creating a Kubernetes node to an operation of updating the Kubernetes node status, so that the Kubernetes considers that the source virtual node is not invalid, but updates the status, thereby avoiding unnecessary re-scheduling performed by the Kubernetes due to handover of the terminal device.

The following describes modules and implementations in the foregoing embodiments of this application by using examples. It should be noted that the implementation in this example is merely an implementation, or may be another implementation. This is not limited in this embodiment of this application.

The virtual node resources (VirtualNodeResources) module may be implemented in a manner of a database, or may be implemented in a manner of shared memory. If the method is implemented in the manner of a database, in one possible implementation, VirtualNodeTable and TaskUnitTable are two tables in the database, and in another possible implementation, fields and values in the VirtualNodeTable and TaskUnitTable are key-value pairs in the database. If the method is implemented in the manner of shared memory, in one possible implementation, VirtualNodeTable and TaskUnitTable are two structure arrays in the memory.

For example, as shown in Table 3 and Table 4, Table 3 is a field that may be included in the VirtualNodeTable, and Table 4 is a field that may be included in the TaskUnitTable.

**Table 3**

| Field name | Field type | Description |
|---|---|---|
| vnId | String | Virtual node identifier, uniquely identifying a virtual node |
| vnGroup | String | Virtual node group |
| tuTypeList | String | Task unit type list |
| vnAddress | String | Virtual node address, which may be IPv4 or IPv6 |
| cpuTotal | String | Total CPUs |
| memTotal | String | Total memory |
| diskTotal | String | Total Storage |
| cpuAllocatable | String | Quantity of allocatable CPUs |
| memAllocatable | String | Quantity of allocatable memories |
| diskAllocatable | String | Quantity of allocatable storage |
| nodeSystemInfo | String | Node system information |
| vnStatus | String | Virtual node status |
| heartbeatTime | Timestamp | Heartbeat timestamp |
| transitionTime | Timestamp | Status transition timestamp |

**Table 4**

| Field name | Field type | Description |
|---|---|---|
| tuName | String | Task unit name, uniquely identifying a task unit |
| tuDescriptor | String | Task unit descriptor |
| vnId | String | Virtual node identifier |
| tuPhase | String | Task unit phase whose value is referred to definition of PodPhase in Kubernetes |
| tuStatus | String | Task unit status |
| suName | String | Scheduling unit name |
| suNamespace | String | Scheduling unit namespace |
| transitionTime | Timestamp | Status transition timestamp |

It should be noted that, in Table 3 and Table 4, vn, tu, and su are abbreviations of a virtual node Virtual Node, a task unit Task Unit, and a scheduling unit Scheduling Unit respectively. The timestamp type depends on implementations, which may be an integer, a string, or a special timestamp type.

The task unit type selector module (TaskUnitTypeSelector module) is configured to select a task unit type of a scheduling unit on a virtual node, where an input parameter includes a Kubernetes pod descriptor, and an output parameter includes a task unit type.

A possible implementation is as follows: A name of a worker node allocated to the pod is obtained from a nodeName field in a spec field of the Kubernetes pod descriptor, where the name of the worker node is a virtual node identifier corresponding to the worker node; and a virtual node context corresponding to the virtual node identifier is found from a virtual node table in virtual node resources based on the virtual node identifier, and a task unit type list field of the virtual node context is parsed into an array of task unit types. If the Kubernetes pod descriptor includes an expected task unit type (for example, if a labels field in the metadata field of the Kubernetes pod descriptor has a label whose key is "task-unit-type", a label value is the expected task unit type), and the expected task unit type is a value in an array of task unit types corresponding to the virtual node identifier, the expected task unit type is a selected task unit type. Otherwise, a first value in the array of task unit types corresponding to the virtual node identifier is used as the selected task unit type; or a task unit type (where the task unit type is a task unit type jointly supported by virtual nodes in the virtual node group) is preset for the virtual node group, and is written into a database or a configuration file of a task unit type selector, so that a corresponding virtual node group is obtained from a virtual node context corresponding to the virtual node identifier, and a task unit type corresponding to the virtual node group in the database or the configuration file is the selected task unit type.

The task unit adapter module (TaskUnitAdapter module) is configured to convert the Kubernetes pod descriptor into a task unit descriptor suitable for running on the terminal device or the network node.

For example, Table 5 shows input parameters that may be included in the task unit adapter module.

**Table 5**

| Parameter name | Type | Description |
|---|---|---|
| pod | Pod | Kubernetes pod descriptor, defined by Kubernetes |
| taskUnitType | String | Optional, task unit type, indicating a running manner of a task unit supported on a terminal device or a network node, where a default value is "Native" |
| reservingPod | Boolean | Optional, original pod descriptor is retained to indicate whether to retain the original pod descriptor in an output parameter, where a default value is false |

An optional value of taskUnitType may include: "Native", "Container", or a type customized by a user based on a specific scenario, for example, JavaThread; and a pod type, defined by Kubernetes. The task unit adapter module uses the fields listed in Table 6.

**Table 6**

| Field name | Field type | Description |
|---|---|---|
| kind | String | Optional, Kubernetes resource type, where a fault value is "Pod" |
| spec | PodSpec | Pod specification |

The PodSpec type is defined by Kubernetes. The task unit adapter module uses fields listed in Table 7.

**Table 7**

| Field name | Field type | Description |
|---|---|---|
| initContainers | Container type array | Optional, container list to be initialized |
| containers | Container type array | Container list |

The Container type is defined by Kubernetes. The task unit adapter module uses fields listed in Table 8.

**Table 8**

| Field name | Field type | Description |
|---|---|---|
| name | String | Container name |
| image | String | Container image name, whose format is defined by Kubernetes, and may further include a host name, a port number, and a label of a registry where the image is located |
| command | String type array | Optional, execution entry of a container |
| args | String type array | Optional, parameter list of execution entries of the container |
| env | EnvVar type array | Optional, environment variable list of process execution in the container |
| workingDir | String | Optional, running directory of processes in the container |

The EnvVar type is defined by Kubernetes. The task unit adapter module uses fields listed in Table 9.

**Table 9**

| Field name | Field type | Description |
|---|---|---|
| name | String | Environment variable name |
| value | String | Environment variable value |

For example, an output result of the task unit adapter module includes a task unit descriptor, the task unit descriptor is of a TaskUnit type, and parameters included in the TaskUnit type are shown in Table 10.

**Table 10**

| Parameter name | Type | Description |
|---|---|---|
| taskUnitType | String | Task unit type, indicating a running manner of a task unit supported on a terminal device or a network node |
| taskUnitName | String | Task unit name |
| taskUnitContent | Any type | Task unit content, including a task unit specification, where a specific parameter type is determined by taskUnitType |

Optional values of taskUnitType are the same as those defined in Table 5; taskUnitContent includes a task unit specification, and a parameter type may be any type, which is specifically determined by a value of taskUnitType. In a possible implementation, the parameter type is represented as a general data type defined in a programming language, for example, an interface { } type in a Go language. An example of a specific type of taskUnitContent is as follows: If a value of taskUnitType is "Native", a parameter of taskUnitContent is of the NativeTaskUnit type. If a value of taskUnitType is "Container", a parameter of taskUnitContent is of the Kubernetes pod type. If a value of taskUnitType is a user-defined type name, a parameter of taskUnitContent is of the user-defined type. For the NativeTaskUnit type, that is, the native task unit, included fields are shown in Table 11.

**Table 11**

| Field name | Field type | Description |
|---|---|---|
| spec | TaskUnitSpec | Task unit specification |
| pod | String | Optional, character strings obtained after pod descriptors of input parameters are serialized |

The TaskUnitSpec type, that is, the task unit specification, included fields are shown in Table 12.

**Table 12**

| Field Name | Field Type | Description |
|---|---|---|
| initExecutableEntities | ExecutableEntity type array | Optional, execution entity list to be initialized |
| executableEntities | ExecutableEntity type array | Execution entity list |

The ExecutableEntity type is an execution entity, and included fields are shown in Table 13.

**Table 13**

| Field name | Field type | Description |
|---|---|---|
| name | String | Execution entity name |
| package | String | Name of an execution entity software package, which may further include a download address of the software package and a version of the software package |
| command | String type array | Optional, execution entry of an execution entity |
| args | String type array | Optional, parameter list of execution entries of the execution entity |
| env | EnvVar type array | Optional, environment variable list of execution entities |
| workingDir | String | Optional, execution entity running directory |

The EnvVar type is the same as that defined in Table 9.

In this embodiment of this application, a character string, an integer, or a Boolean type in a parameter type or a field type may be specifically implemented by a data type provided by a database or a programming language. This is not limited in this embodiment of this application. In this embodiment of this application, an array in the parameter type or the field type may be specifically implemented by using a data structure such as an array, a vector, or a list provided by the programming language. This is not limited in this embodiment of this application.

The following provides an implementation of a processing process of the task unit adapter module.

Step 1: Create an initial object taskUnit of the TaskUnit type and assign a value of an input parameter taskUnitType to a taskUnitType field of the taskUnit object.

Step 2: Create string variables namespace and name; if a namespace field in a metadata field of an input parameter pod exists and its value is not null, assign the value of this field to the namespace variable, or otherwise, the value of the namespace variable is "default"; if a name field in a metadata field of an input parameter pod exists and its value is not null, assign the value of this field to the name variable, or otherwise, a random character string is generated as the value of the name variable, the value of the namespace variable and the value of the name variable are separated by a hyphen "-" and assigned to the taskUnitName field in taskUnit, that is, taskUnitName = namespace + "-" + name.

Step 3: If the value of taskUnitType is "Container", create an initial Kubernetes pod object named k8sPod, assign the value of pod to k8sPod, assign a value of k8sPod to the taskUnitContent field in taskUnit, and return taskUnit, that is, the task unit descriptor.

Step 4: If the value of taskUnitType is "Native", create an initial object of the NativeTaskUnit type named nativeTaskUnit; if an initContainers field of the spec field of the pod exists and is not null, traverse each initContainer in initContainers, invoke "ConvertContainerToExecutableEntity" method (ConvertContainerToExecutableEntity), use initContainer as a parameter and convert it into an initExecutableEntity object, and add it to an initExecutableEntities array in a spec field of nativeTaskUnit; and if the containers field of the spec field of the pod parameter exists and is not null, traverses each container in containers, invoke the "ConvertContainerToExecutableEntity" method (ConvertContainerToExecutableEntity), use the container as a parameter, converts it into an executableEntity object, and adds it to an executableEntities array in the spec field of nativeTaskUnit.

Step 5: If the reservingPod parameter exists and its value is true, convert the pod parameter into a character string (assuming that a variable name is body) based on an existing JSON serialization method, and assign the serialized character string to a pod field of nativeTaskUnit.

Step 6: Assign the nativeTaskUnit object to the taskUnitContent field in taskUnit and return the taskUnit object, that is, the task unit descriptor.

Optionally, if the value of taskUnitType is a user-defined type name, the pod parameter is converted into an object of the user-defined type according to a user-defined rule, the object is assigned to a taskUnitContent field in taskUnit, and a taskUnit object, that is, a task unit descriptor, is returned.

The "converting a container into an execution entity" method (ConvertContainerToExecutableEntity) includes: input parameters, including: container, whose type is Container, and the type is shown in Table 8; output parameters, including: executableEntity, whose type is ExecutableEntity, and the type is shown in Table 13. The process of converting a container into an execution entity is converted according to the field mapping relationship included in Table 14.

**Table 14**

| ExecutableEntity type field name | Container type field name |
|---|---|
| name | name |
| package | image |
| command | command |
| args | args |
| env | env |
| workingDir | workingDir |

The worker node adapter module (WorkerNodeAdapter module) is configured to convert a virtual node context in the virtual node table into a Kubernetes node descriptor, including: an input parameter, including virtualNodeContext, where a type is VirtualNodeContext, VirtualNodeContext is a type of each context in the VirtualNodeTable, and the type is shown in Table 3; and an output parameter, including node, where a type is Node, and the Node type is defined by Kubernetes. For details, refer to a Kubernetes document and source code, and details are not described herein again.

The following provides an implementation of a processing process of the worker node adapter module.

Step 1: Create an initial object node of the Kubernetes node type, set a value of an apiVersion field of the object to the supported Kubernetes node API version, for example, "vl", and set a value of a kind field to "Node".

Step 2: Assign the value ofvnId in virtualNodeContext to a name field in the metadata field of the node.

Step 3: Add an item to the addresses array of a status field of the node, where the item includes type and address, a value of a type field is "InternalIP", and a value of the address field is a value of a vnAddress field in virtualNodeContext.

Step 4: Assign the values of cpuTotal, memTotal, and diskTotal in virtualNodeContext to cpu, memory, and ephemeral-storage in a capacity field of the status field of the node.

Step 5: Assign the values of cpuAllocatable, memAllocatable, and diskAllocatable in virtualNodeContext to cpu, memory, and ephemeral-storage in an allocatable field of the status field of the node.

Step 6: If a value of a nodeSystemInfo field in virtualNodeContext is not null, parse the value of the field to the nodeSystemInfo object of the NodeSystemInfo type defined by Kubernetes, and assign the object to a nodeInfo field in the status field of the node.

Step 7: Add an item to a conditions array of the status field of the node, where the item includes type, status, and lastHeartbeatTime, and a value of a type field is "Ready"; if a value of a vnStatus field in virtualNodeContext is a preset flag indicating that the virtual node is ready, for example, "ready", a value of the status field is "True", or otherwise, the value of the status field is "False"; optionally, if the value of the vnStatus field is a preset flag indicating that the virtual node is being created or successfully created, for example, "creating" or "created", the value of the status field may also be set to "True"; a value of a lastHeartbeatTime field is a string value converted from a value of a heartbeatTime field in virtualNodeContext; and a value of a lastTransitionTime field is a string value converted from a value of a transitionTime field in virtualNodeContext.

Step 8: Return the node object.

The scheduling unit adapter module (SchedulingUnitAdapter module), configured to convert a task unit context in a task unit table into a Kubernetes pod descriptor, where an input parameter includes: taskUnitContext, and a type is TaskUnitContext, where TaskUnitContext is a type of each context in the TaskUnitTable, and the type is shown in Table 4; and an output parameter includes: pod, and a type is pod, where the pod type is defined by Kubernetes. For details, refer to a Kubernetes document and source code, and details are not described herein again.

For example, an implementation includes the following steps.

Step 1: Create an initial object pod of the Kubernetes pod type, set a value of an apiVersion field of the object to the supported Kubernetes node API version, for example, "v1", and set a value of a kind field to "Pod".

Step 2: Assign the values of the suName and suNamespace fields in taskUnitContext to the name and namespace fields in the metadata field of the pod object, respectively.

Step 3: Assign the value of the tuPhase field in taskUnitContext to the phase field in the status field of the pod.

Step 4: Set the status field in the pod object according to the tuStatus field in taskUnitContext, including: adding an item to the conditions array of the status field, where the fields of the item include type, status, and lastTransitionTime, and the value of the type field is "Ready". If the value of the tuStatus field is a preset flag indicating that the task unit is ready, for example, "ready", the value of the status field is "True"; otherwise, the value of the status field is "False". Optionally, if the value of the tuStatus field is a preset flag indicating that the task unit is being created or successfully created, for example, "creating" or "created", the value of the status field may also be set to "True". The value of lastTransitionTime is the value of the transitionTime field in taskUnitContext that is converted into a character string.

Step 5: Return the pod object.

The task unit agent module (TaskUnitAgent module) receives task unit management request messages and processes the messages based on the message type. The task unit management request messages are classified into task unit creation request messages and task unit deletion request messages.

For example, an implementation includes: If the message type is a create task unit request message, the message includes a task unit descriptor, where the task unit descriptor includes a task unit type taskUnitType, a task unit name taskUnitName, and task unit content taskUnitContent, where the task unit content includes a task unit specification, and a processing procedure is as follows.

If the value of taskUnitType is "Native", parse taskUnitContent to the nativeTaskUnit object of the NativeTaskUnit type, traverse the initExecutableEntities and executableEntities arrays in the spec field of the nativeTaskUnit object, and perform the following operations on each initExecutableEntity or executableEntity array.

Step 1: Detect whether an execution entity software package specified by a package field in an initExecutableEntity or an executableEntity of a nativeTaskUnit object exists on a terminal device or a network node where the execution entity software package is located; if the execution entity software package does not exist, download the execution entity software package of the task unit from a task unit repository; and if the software package is a compressed package, decompress the software package.

Step 2: If the env field exists and its value is not null, traverse the env array and set environment variables.

Step 3: If the command field exists and its value is not null, use the first value in the command array as the command. For example, if command = ["java"], the command is java.

Step 4: If the args field exists and its value is not null, use spaces to connect the content in the args array to form a complete command parameter. For example, if the value is args = ["-jar", "image-recognition.jar"], the parameter list is jar image-recognition.jar.

Step 5: Combine the command and command parameters and run the command. For example, run the java jar image-recognition.jar command.

Step 6: Record a task unit name taskUnitName, a task unit type taskUnitType, and a process identifier or a thread identifier after command execution in a local database or a memory.

Optionally, if the value of the task unit type taskUnitTyped is "Container", a processing procedure is: sending the value of the taskUnitContent field in the message to a Kubernetes node agent, and the Kubernetes node agent processes subsequent container image downloading and container running, which belongs to the conventional technology and is not described in detail. The task unit name taskUnitName, the task unit type taskUnitType, and the container identifier are recorded in a local database or memory.

Optionally, if the task unit type is a type customized by the user according to an application scenario, the user creates a task unit instance of the type. For example, if a value of the task unit type taskUnitType is "JavaThread", the task unit instance may be created by dynamically loading a Java class, and a task unit name taskUnitName, the task unit type taskUnitType, and a Java thread identifier are recorded in a local database or a memory.

If the message type is a task unit deletion request message, the message includes a task unit name, and the processing procedure is: detecting whether the task unit name exists in a local database or memory; if the task unit name exists, and if the value of the task unit type is "Native", finding all process identifiers or thread identifiers corresponding to the task unit name, and terminating the corresponding process or thread. If the value of the task unit type is "Container", all container identifiers corresponding to the task unit name are found, and the corresponding containers are terminated and deleted. If the task unit type is a type customized by the user based on an application scenario, the user deletes a task unit instance of the type. For example, if the value of the task unit type is "JavaThread", all Java thread identifiers corresponding to the task unit name are found, and corresponding Java threads are terminated. If the task unit is deleted successfully, the task unit is deleted from the local database or memory.

The native task unit repository provides the following interfaces: an upload interface, configured to upload the execution entity software package of a task unit, where interface parameters include a software package name and an optional software package version; and a download interface, configured to download the execution entity software package of a task unit, where interface parameters include a software package name and an optional software package version.

The container registry provides a standard container repository interface. A specific implementation may be provided by an existing container mirror service, or a container mirror server is built by itself. This belongs to the conventional technology, and details are not described herein again.

It should be noted herein that the tables shown in embodiments of this application are merely examples, and should not constitute a limitation on this application. For example, the tables may be combined or split, and are not limited to the representation forms in embodiments of this application.

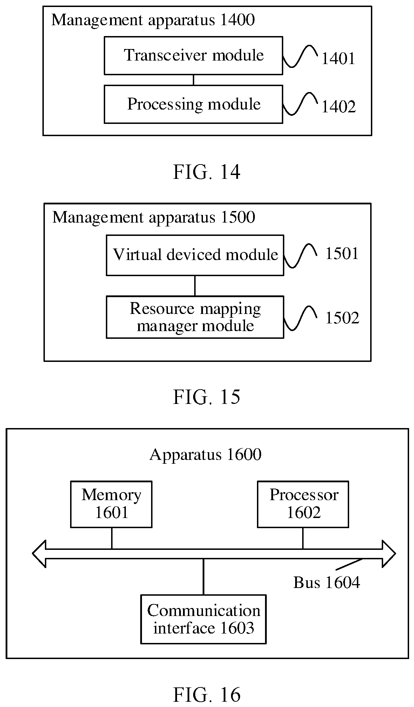

FIG. 14 is a schematic diagram of a structure of a computing node management apparatus according to an embodiment of this application. The management apparatus shown in FIG. 14 may be configured to perform procedures and/or steps corresponding to the first device in any one of the foregoing embodiments.

As shown in FIG. 14, a management apparatus 1400 in this embodiment includes a transceiver module 1401 and a processing module 1402.

The transceiver module 1401 is configured to obtain first information, where the first information indicates the first device to create a task unit instance, the first information includes a task unit descriptor, the task unit descriptor includes description information of a task unit of the first device, and the description information includes at least one of the following: a task unit type of the task unit and a task unit specification of the task unit.

The processing module 1402 is configured to create the task unit instance based on the task unit descriptor.

In an example, the processing module 1402 may be configured to perform the step of creating a task unit instance based on the task unit descriptor in the management method in any one of FIG. 6 to FIG. 12. For example, the processing module 1402 is configured to perform S603.

In a possible implementation, before obtaining the first information, the transceiver module 1401 is further configured to: send a resource registration request message, where the resource registration request message is used to request to map the first device to a worker node, the resource registration request message includes a resource identifier and task unit type information of the first device, and the task unit type information includes a task unit type that can be used by the first device.

In a possible implementation, the transceiver module 1401 is further configured to: obtain a resource registration response message from a second device, where the resource registration response message includes result information indicating that the first device is mapped to the worker node.

It should be noted that the transceiver module 1401 and the processing module 1402 in this embodiment may also be combined into one module. For example, the combined module is referred to as a task unit agent module, and is configured to perform steps/functions in the embodiments shown in FIG. 6 to FIG. 12.

FIG. 15 is a schematic diagram of a structure of a computing node management apparatus according to an embodiment of this application. The management apparatus shown in FIG. 15 may be configured to perform procedures and/or steps corresponding to the second device in any one of the foregoing embodiments.

As shown in FIG. 15, a communication apparatus 1500 in this embodiment includes a virtual deviced module 1501 and a resource mapping manager module 1502. The virtual deviced module 1501 is configured to determine a task unit descriptor based on a scheduling unit descriptor and a virtual node context, where the virtual node context indicates resource information of a worker node to which a first device is mapped, the resource information includes a resource identifier and task unit type information of the first device, the task unit type information includes a task unit type that can be used by the first device, the task unit descriptor includes description information of a task unit of the first device, and the description information includes at least one of the following: a task unit type of the task unit and a task unit specification of the task unit. The resource mapping manager module 1502 is configured to send first information to the first device, where the first information indicates the first device to create a task unit instance, and the first information includes the task unit descriptor.

In an example, the virtual deviced module 1501 may be configured to perform the step of determining a computation descriptor in the management method in any one of FIG. 6 to FIG. 12. For example, the virtual deviced module 1501 is configured to perform S601.

In a possible implementation, the virtual deviced module 1501 is specifically configured to: select a task unit type on the worker node for a scheduling unit based on the virtual node context; and determine the task unit descriptor based on the scheduling unit descriptor and the task unit type.

In a possible implementation, the resource mapping manager module 1502 is further configured to: obtain a resource registration request message from the first device, where the resource registration request message includes the resource information; and generate, based on the resource registration request message, the virtual node context existing when the first device is mapped to the worker node.

In a possible implementation, the resource mapping manager module 1502 is further configured to: send a resource registration response message to the first device, where the resource registration response message includes result information indicating that the first device is mapped to the worker node.

In a possible implementation, the virtual deviced module 1501 is further configured to: generate a worker node descriptor of the worker node based on the virtual node context; send the worker node descriptor to a control device; and obtain the scheduling unit descriptor sent by the control device based on the worker node descriptor.

In a possible implementation, the virtual deviced module 1501 is further configured to: obtain a migrate-out request message, where the migrate-out request message is used to request to migrate out a task unit context, and the task unit context includes a mapping relationship between the task unit descriptor and the worker node; and send the task unit context.

This application further provides a computing node management system. The management system includes the apparatus (that is, the apparatus 1400) shown in FIG. 14 and/or the apparatus (that is, the apparatus 1500) shown in FIG. 15.

FIG. 16 is a schematic diagram of a structure of a management apparatus according to another embodiment of this application. The management apparatus shown in FIG. 16 may be configured to perform the management method according to any one of the foregoing embodiments.

As shown in FIG. 16, the apparatus 1600 in this embodiment includes a memory 1601, a processor 1602, a communication interface 1603, and a bus 1604. Communication connections between the memory 1601, the processor 1602, and the communication interface 1603 are implemented through the bus 1604.

It should be understood that the apparatus 1600 may be specifically the first communication device or the second communication device in the foregoing embodiments, or functions of the first communication device or the second communication device in the foregoing embodiments may be integrated into the apparatus 1600. The apparatus 1600 may be configured to perform steps and/or procedures corresponding to the first communication device or the second communication device in the foregoing embodiments.

The memory 1601 may be a read only memory (read only memory, ROM), a static storage device, a dynamic storage device, or a random access memory (random access memory, RAM). The memory 1601 may store a program. When the program stored in the memory 1601 is executed by the processor 1602, the processor 1602 is configured to perform the steps of the methods shown in FIG. 6 to FIG. 13.

The processor 1602 may be a general-purpose central processing unit (central processing unit, CPU), a microprocessor, an application-specific integrated circuit (application-specific integrated circuit, ASIC), or one or more integrated circuits, and is configured to execute a related program, to implement the management method in the method embodiments of this application.

The processor 1602 may alternatively be an integrated circuit chip and has a signal processing capability. In an implementation process, steps of the automated driving vehicle planning method in embodiments of this application may be completed by using an integrated logic circuit of hardware in the processor 1602 or instructions in a form of software.

The processor 1602 may be alternatively a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like.

Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1601. The processor 1602 reads information in the memory 1601, and completes, in combination with hardware of the processor 1602, functions that need to be performed by units included in the temperature measurement apparatus in this application. For example, the processor 1602 may perform steps/functions in the embodiments shown in FIG. 6 to FIG. 13.

The communication interface 1603 may use, but is not limited to, a transceiver apparatus such as a transceiver, to implement communication between the apparatus 1500 and another device or a communication network.

The bus 1604 may include a path for transmitting information between components (for example, the memory 1601, the processor 1602, and the communication interface 1603) of the apparatus 1600.

It should be understood that the apparatus 1600 shown in this embodiment of this application may be an electronic device, or may be a chip configured in an electronic device.

It should be understood that, the processor in embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

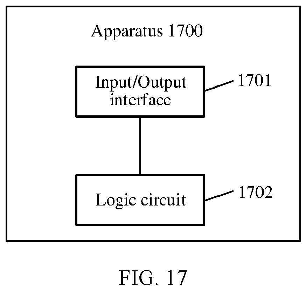

FIG. 17 is a schematic diagram of a structure of a management apparatus according to an embodiment of this application. A management apparatus 1700 includes an input/output interface 1701 and a logic circuit 1702. The input/output interface 1701 may be configured to input or output instructions or information. The logic circuit 1702 may be configured to execute the instructions of the input/output interface 1701 or perform, based on the information about the input/output interface 1701, steps/functions in the embodiments shown in FIG. 6 to FIG. 13.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. At least one of the following items (pieces) or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computing node management method, applied to a first device, comprising:
obtaining first information, wherein the first information indicates the first device to create a task unit instance, the first information comprises a task unit descriptor, the task unit descriptor comprises description information of a task unit of the first device, and the description information comprises at least one of the following: a task unit type of the task unit and a task unit specification of the task unit; and
creating the task unit instance based on the task unit descriptor.

2. The method according to claim 1, wherein before the obtaining first information, the method further comprises:
sending a resource registration request message, wherein the resource registration request message is used to request to map the first device to a worker node, the resource registration request message comprises a resource identifier and task unit type information of the first device, and the task unit type information indicates a task unit type that can be used by the first device.

3. The method according to claim 1 or 2, wherein the method further comprises:
obtaining a resource registration response message from a second device, wherein the resource registration response message comprises result information indicating that the first device is mapped to the worker node.

4. A computing node management method, applied to a second device, comprising:
determining a task unit descriptor based on a scheduling unit descriptor and a virtual node context, wherein the virtual node context indicates resource information of a worker node to which a first device is mapped, the resource information comprises a resource identifier and task unit type information of the first device, the task unit type information comprises a task unit type that can be used by the first device, the task unit descriptor comprises description information of a task unit of the first device, and the description information comprises at least one of the following: a task unit type of the task unit and a task unit specification of the task unit; and
sending first information to the first device, wherein the first information indicates the first device to create a task unit instance, and the first information comprises the task unit descriptor.

5. The method according to claim 4, wherein the determining a task unit descriptor based on a scheduling unit descriptor and a virtual node context comprises:
selecting a task unit type on the worker node for a scheduling unit based on the virtual node context; and
determining the task unit descriptor based on the scheduling unit descriptor and the task unit type.

6. The method according to claim 4 or 5, wherein before the determining a task unit descriptor based on a scheduling unit descriptor and a virtual node context, the method further comprises:
obtaining a resource registration request message from the first device, wherein the resource registration request message comprises the resource information; and
generating, based on the resource registration request message, the virtual node context existing when the first device is mapped to the worker node.

7. The method according to claim 6, wherein the method further comprises:
sending a resource registration response message to the first device, wherein the resource registration response message comprises result information indicating that the first device is mapped to the worker node.

8. The method according to claim 6 or 7, wherein the method further comprises:
generating a worker node descriptor of the worker node based on the virtual node context;
sending the worker node descriptor to a control device; and
obtaining the scheduling unit descriptor sent by the control device based on the worker node descriptor.

9. The method according to claim 6, wherein the method further comprises:
obtaining a migrate-out request message, wherein the migrate-out request message is used to request to migrate out a task unit context, and the task unit context comprises a mapping relationship between the task unit descriptor and the worker node; and
sending the task unit context.

10. A computing node management apparatus, wherein the apparatus is used in a first device, and the apparatus comprises:
a transceiver module, configured to obtain first information, wherein the first information indicates the first device to create a task unit instance, the first information comprises a task unit descriptor, the task unit descriptor comprises description information of a task unit of the first device, and the description information comprises at least one of the following: a task unit type of the task unit and a task unit specification of the task unit; and
a processing module, configured to create the task unit instance based on the task unit descriptor.

11. The apparatus according to claim 10, wherein before the obtaining first information, the transceiver module is further configured to:
send a resource registration request message, wherein the resource registration request message is used to request to map the first device to a worker node, the resource registration request message comprises a resource identifier and task unit type information of the first device, and the task unit type information comprises a task unit type that can be used by the first device.

12. The apparatus according to claim 11, wherein the transceiver module is further configured to:
obtain a resource registration response message from a second device, wherein the resource registration response message comprises result information indicating that the first device is mapped to the worker node.

13. A computing node management apparatus, wherein the apparatus is used in a second device, and the apparatus comprises:
a virtual deviced module, configured to determine a task unit descriptor based on a scheduling unit descriptor and a virtual node context, wherein the virtual node context indicates resource information of a worker node to which a first device is mapped, the resource information comprises a resource identifier and task unit type information of the first device, the task unit type information comprises a task unit type that can be used by the first device, the task unit descriptor comprises description information of a task unit of the first device, and the description information comprises at least one of the following: a task unit type of the task unit and a task unit specification of the task unit; and
a resource mapping manager module, configured to send first information to the first device, wherein the first information indicates the first device to create a task unit instance, and the first information comprises the task unit descriptor.

14. The apparatus according to claim 13, wherein the virtual deviced module is specifically configured to:
select a task unit type on the worker node for a scheduling unit based on the virtual node context; and
determine the task unit descriptor based on the scheduling unit descriptor and the task unit type.

15. The apparatus according to claim 13 or 14, wherein the resource mapping manager module is further configured to:
obtain a resource registration request message from the first device, wherein the resource registration request message comprises the resource information; and
generate, based on the resource registration request message, the virtual node context existing when the first device is mapped to the worker node.

16. The apparatus according to claim 15, wherein the resource mapping manager module is further configured to:
send a resource registration response message to the first device, wherein the resource registration response message comprises result information indicating that the first device is mapped to the worker node.

17. The apparatus according to claim 15 or 16, wherein the virtual deviced module is further configured to:
generate a worker node descriptor of the worker node based on the virtual node context;
send the worker node descriptor to a control device; and
obtain the scheduling unit descriptor sent by the control device based on the worker node descriptor.

18. The apparatus according to claim 15, wherein the virtual deviced module is further configured to:
obtain a migrate-out request message, wherein the migrate-out request message is used to request to migrate out a task unit context, and the task unit context comprises a mapping relationship between the task unit descriptor and the worker node; and
sending the task unit context.

19. A computing node management system, wherein the management system comprises a control device, a first device, and a second device, a task unit agent module is deployed in the first device, and the control device comprises a worker node descriptor existing when the first device is mapped to a worker node;
the control device is configured to allocate, based on the worker node descriptor existing when the first device is mapped to the worker node, a scheduling unit to the worker node and send a scheduling unit descriptor of the scheduling unit to the second device;
the second device is configured to determine a task unit descriptor based on a scheduling unit descriptor and a virtual node context, wherein the virtual node context indicates resource information of a worker node to which a first device is mapped, the resource information comprises a resource identifier and task unit type information of the first device, the task unit type information comprises a task unit type that can be used by the first device, the task unit descriptor comprises description information of a task unit of the first device, and the description information comprises at least one of the following: a task unit type of the task unit and a task unit specification of the task unit;
the second device is further configured to send first information to the first device, wherein the first information indicates the first device to create a task unit instance, and the first information comprises the task unit descriptor; and
the task unit agent module is configured to create the task unit instance based on the task unit descriptor.

20. The system according to claim 19, wherein the second device is specifically configured to:
select a task unit type on the worker node for a scheduling unit based on the virtual node context; and
determine the task unit descriptor based on the scheduling unit descriptor and the task unit type.

21. The system according to claim 19 or 20, wherein the task unit agent module is further configured to send a resource registration request message to the second device, wherein the resource registration request message is used to request to map the first device to a worker node, and the resource registration request message comprises the resource information;
the second device is further configured to: obtain the resource registration request message, and generate, based on the resource registration request message, the virtual node context existing when the first device is mapped to the worker node.

22. The system according to claim 21, wherein the second device is further configured to:
generate a worker node descriptor of the worker node based on the virtual node context;
send the worker node descriptor to a control device; and
obtain the scheduling unit descriptor sent by the control device based on the worker node descriptor.

23. The system according to claim 21, wherein the second device is further configured to:
obtain a migrate-out request message, wherein the migrate-out request message is used to request to migrate out a task unit context, and the task unit context comprises a mapping relationship between the task unit descriptor and the worker node; and
send the task unit context.

24. The system according to any one of claims 19 to 23, wherein the control device is deployed on an edge node.

25. The system according to any one of claims 19 to 23, wherein the control device is deployed on a cloud node.

26. A computing node management apparatus, comprising at least one processor and a memory, wherein the processor is coupled to the memory, the memory stores program instructions, and when the program instructions stored in the memory are executed by the processor, the computing node management apparatus is enabled to perform the computing node management method according to any one of claims 1 to 3, or perform the computing node management method according to any one of claims 4 to 9.

27. A computing node management apparatus, comprising a logic circuit and an input/output interface, wherein the input/output interface is configured to input or output instructions or information, and the logic circuit is configured to perform the method according to any one of claims 1 to 3 by executing the instructions or based on the information.

28. A computing node management apparatus, comprising a logic circuit and an input/output interface, wherein the input/output interface is configured to input or output instructions or information, and the logic circuit is configured to perform the method according to any one of claims 4 to 9 by executing the instructions or based on the information.

29. A computer-readable storage medium, wherein the computer-readable medium stores program instructions for computer execution, and the program instructions are used to perform the computing node management method according to any one of claims 1 to 3, or perform the computing node management method according to any one of claims 4 to 9.

30. A computer program product, wherein the computer program product comprises computer program instructions, and when the computer program instructions are run on a computer, the computer is enabled to implement the computing node management method according to any one of claims 1 to 3, or perform the computing node management method according to any one of claims 4 to 9.
